# EUROPEAN PATENT SPECIFICATION

(11) **EP 3 575 273 B1**
(45) Date of publication and mention of the grant of the patent: **08.06.2022**
(21) Application number: 17893791.8
(22) Date of filing: 27.09.2017
(51) Int. Cl.: C03C 27/06

(54) **PREPARATION PROCESS FOR VACUUM GLASS**
HERSTELLUNGSVERFAHREN FÜR EIN VAKUUMGLAS
PROCÉDÉ DE PRÉPARATION POUR UN VERRE SOUS VIDE

(30) Priority: 26.01.2017 CN 201710056845
(43) Date of publication of application: 04.12.2019
(73) Proprietor: Lian, Yuqi, Dandong, Liaoning 118000 (CN)
(72) Inventor: Lian, Yuqi, Dandong, Liaoning 118000 (CN)
(74) Representative: Croce, Valeria
(86) International application number: PCT/CN2017/103681
(87) International publication number: WO 2018/137354

(56) References cited:
- WO-A1-2004/039741
- CN-A- 102 863 145
- CN-A- 102 951 820
- CN-A- 103 043 921
- CN-A- 103 420 624
- CN-U- 202 099 205
- US-A1- 2014 272 208
- US-A1- 2015 300 077

## Description

The present application is on the basis of, and claims the priority of Chinese Application No. 201710056845.6, filed in the Chinese Patent Office on January 26, 2017.

### Field of the Invention

The present invention belongs to the field of glass, and particularly relates to vacuum glass and a preparation method thereof.

### Background of the Invention

Energy and environmental issues are two major issues in the present world, and the resulting climate problems are one of the greatest challenges that the human being has been facing in the 21st century. For countries with fossil fuels such as coal and oil as main energy sources, the problems of energy shortage and environmental pollution are more distinct. Energy conservation and efficient use of energy are effective ways to solve the above problems.

Building energy consumption accounts for a considerable proportion in the total energy consumption. The building energy consumption is dominated by heating and air conditioning energy consumption, which account for more than 50% of the total building energy consumption. By improving the heat preservation performance of buildings, such as improving the heat preservation performance of building doors and windows, the energy consumption of the building can be effectively reduced, and the comfort of living can also be improved.

A vacuum glass known to the inventor has the functions of heat preservation, thermal insulation and/or sound insulation, and can be used in the fields of buildings, energy conservation, solar energy and the like, for example, used in places or devices requiring thermal insulation and/or sound insulation, or used as devices requiring thermal insulation and/or sound insulation such as building doors and windows, refrigeration equipment doors and windows, solar collectors and the like. The vacuum glass can play roles in achieving thermal insulation and thermal insulation, saving energy, reducing the consumption, preventing dew formation and/or achieving sound insulation and noise reduction, etc.

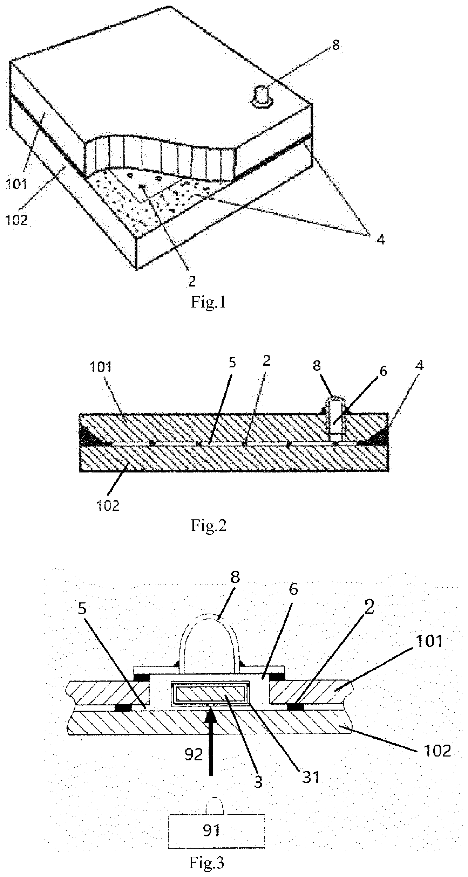

Fig.1 is a perspective view of a vacuum glass known to the inventor, and Fig.2 is a sectional view of the vacuum glass in Fig.1. Referring to Fig.1 and Fig.2, the vacuum glass comprises two glass plates 101 and 102, a cavity 5 enclosed by the two glass plates and a sealant 4, a blocked evacuation port 6, a sealing cap 8 for protecting the evacuation port 6, and a support 2 disposed between the two glass plates. The interior of the cavity 5 is in a vacuum, and the support 2 is for supporting a gap between the two glass plates.

The method for preparing the vacuum glass known to the inventor mainly comprises
(1) preparing two glass plates 101 and 102, and deploying the evacuation port 6 on the glass plate 101;
(2) substantially horizontally disposing the glass plate 102, coating a slurry sealant 4 along the periphery region of the glass plate 102, and disposing the support 2 in a proper position;
(3) stacking the other glass plate 101 on the glass plate 102 to form a plate-like cavity defined by the glass plates 101 and 102 and the sealant 4;
(4) heating the stacked glass plates at atmospheric pressure to seal the gap along the periphery of the first glass plate 101 and the second glass plate 102 with the sealant 4; and
(5) vacuuming an interior of the sealed glass plate through the evacuation port 6, blocking the evacuation port 6 after the vacuuming is completed, and covering the blocked evacuation port 6 with the sealing cap 8.

CN1621653 discloses a vacuum glass with an evacuation port, the vacuum glass further comprising a getter enclosed by an infrared-absorbing-material shell. Referring to Fig.3, the vacuum glass comprises two glass plates 101 and 102 facing each other and a support 2 being arranged therebetween, so a cavity 5 is enclosed between the glass plates 101 and 102. An evacuation port 6 is provided on the glass plate 101, and the evacuation port 6 is blocked by a sealing cap 8. An enclosed getter, which is composed of an closed infrared-absorbing-material shell 31 and a getter 3 disposed therein, is disposed in a groove enclosed by the evacuation port 6. A laser generator 91 for perforating the enclosed getter having an closed infrared-absorbing-material shell is disposed at a position aligned to the getter at the outside of the vacuum glass, and an infrared laser beam 92 emitted from the laser generator 91 penetrates through the glass plate 102 to perforate the infrared-absorbing-material shell 31 to unseal the same. The documents US 2015/300077 A1, US 2014/272208 A1 and CN 102 863 145 A describe vacuum glasses and methods for their production.

### Summary of the Invention

The "enclosed getter" disclosed in CN1621653 consists of an enclosing layer (an closed infrared-absorbing-material shell) and a getter disposed in the closed infrared-absorbing-material shell. The inventor finds that the vacuum glass comprising the enclosed getter has the defects that the getter being complicated in structure, high in cost, and the need to reserve an evacuation port on the glass plate, the amount of disposed getter being limited by the size of the reserved groove/hole, as well as uneven stress distribution resulting from the periphery of the plate being higher than the center, which is caused by the process of sealing at first and then vacuuming, etc..

The present invention creatively provides a vacuum glass that does not comprise an enclosure for enclosing a getter and said enclosure is made of a hermetic material.

One aspect of the present invention is to provide a vacuum glass. The objective of the present invention is to provide a method for preparing the vacuum glass as defined in independent claim 1. Yet another aspect of the present invention is to provide a door or a window.

A further aspect of the present invention is to provide an instrument or a meter, and still further aspect of the present invention is to provide a solar collector.

Beneficial effects of the disclosed embodiments:
One or more disclosed embodiments have one or more of the following beneficial effects:
1) The vacuum glass in accordance with one or more embodiments is tightly sealed, so a high degree of vacuum in the cavity is achieved;
2) the vacuum glass in accordance with one or more embodiments has better thermal insulation performance; it has a lower thermal conductivity K;
3) the vacuum glass in accordance with one or more embodiments has better sound insulation performance; it has higher sound insulation value R_{w}+Cₜᵣ;
4) the vacuum glass in accordance with one or more embodiments has better radiation resistance performance;
5) the amount of the getter in the vacuum glass in accordance with one or more embodiments can be in positive correlation with the glass area, thereby ensuring the air infiltrated or released into the vacuum cavity during usage is absorbed, so the better durability of the glass is achieved;
6) the vacuum glass in accordance with one or more embodiments does not have any blocked evacuation port, so its structure is more complete;
7) the vacuum glass in accordance with one or more embodiments does not have any blocked evacuation port; therefore, the stress weak points and vulnerable points caused by the evacuation port can be avoided;
8) the surface of the vacuum glass in accordance with one or more embodiments does not have impervious groove or hole (hidden groove, blind hole); thus the stress weak points and vulnerable points that caused by the grooves or the blind holes can be avoided;
9) the vacuum glass in accordance with one or more embodiments is sealed in vacuum, so the stress distribution between the sealed periphery and center of the glass is uniform, and the product is safer and more stable;
10) elastic supports are applied in the vacuum glass in accordance with one or more embodiments; the therefore the situation of uneven stress distribution between the supports and the glass plate, which is caused by the height deviation of the supports or the height deviation in the cavity, is avoided, and the situation of displacement of some of the supports can also be avoided, so the product is safer and more stable;
11) the vacuum glass in accordance with one or more embodiments does not have blocked evacuation port, so the appearance is more pretty;
12) the vacuum glass in accordance with one or more embodiments uses a transparent inorganic substance, such as glass, as the supports, so the product has a more beautiful visual effect; and
13) the method for preparing the vacuum glass in accordance with one or more embodiments is simpler in steps and lower in cost.

### Brief Description of the Drawings

The drawings illustrated herein are intended to provide a further understanding of the present invention and constitute a part of the present application, and illustrative embodiments of the present invention and the descriptions thereof are for explaining the present invention, rather than limiting the present invention. In the drawings:
Fig.1 is a perspective view of a vacuum glass known to the inventor;
Fig.2 is a sectional view of the vacuum glass of Fig.1;
Fig.3 is a schematic diagram of a vacuum glass of CN1621653;
Fig.4 is a perspective view of a vacuum glass of Example 1;
Fig.5 is an A-A sectional view of the vacuum glass of Fig.4;
Fig.6 is a perspective view of a vacuum glass of Example 2;
Fig.7 is an A-A sectional view of the vacuum glass of Fig.6;
Fig.8 is a perspective view of a vacuum glass of Example 3;
Fig.9 is an A-A sectional view of the vacuum glass of Fig.8;
Fig.10 is a perspective view of a vacuum glass of Example 4;

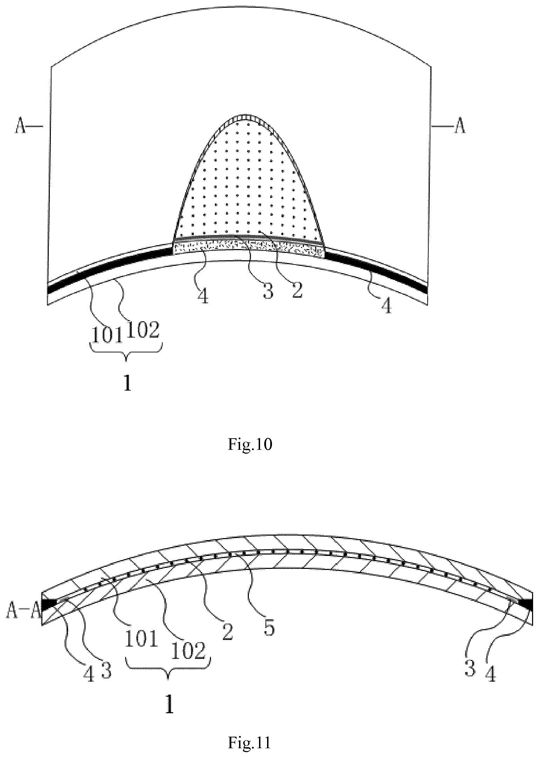

Fig.1 1 is an A-A sectional view of the vacuum glass of Fig. 10;

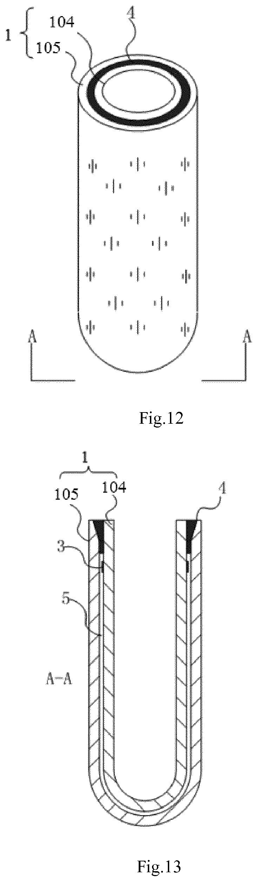

Fig. 12 is a perspective view of a vacuum glass of Example 5;
Fig. 13 is an A-A sectional view of the vacuum glass of Fig. 12;

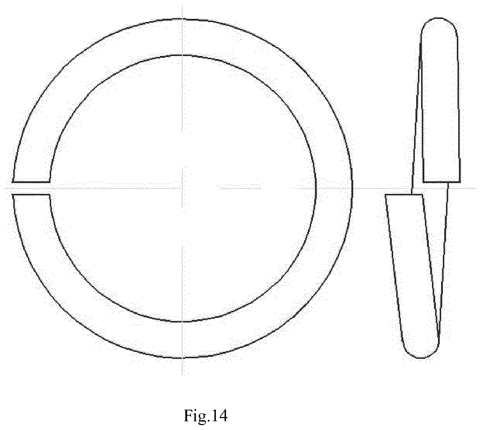

Fig.14 is a front view and a side view of an elastic gasket.

### Detailed Description of the Embodiments

Specific embodiments of the present invention will be described now in detail. Examples of specific embodiments are illustrated in the drawings. Although the present invention has been described in combination with the specific embodiments, it should be aware that the present invention is not intended to be limited to these specific embodiments. On the contrary, these embodiments are intended to encompass substituted, alternative or equivalent embodiments within the spirit and scope of the present invention limited by the claims. In the following descriptions, numerous specific details are set forth to provide a comprehensive understanding of the present invention. The present invention can be practiced without some or all of these specific details. In other instances, well-known process operations are not described in detail in order not to unnecessarily obscure the present invention.

When being jointly used with "include" or similar words in the present specification and appended claims, the singular form "the" comprises plural reference, unless otherwise clearly indicated in the context. Unless defined otherwise, all technical and scientific terms used herein have the same meanings as commonly understood by those of ordinary skill in the art to which the present invention belongs.

A first aspect of the present invention provides vacuum glass, comprising:
a glass body (1), a cavity (5) enclosed by the glass body (1) and a sealant (4) together, and a getter (3) disposed in the cavity (5);
the cavity (5) is hermetic;
the getter (3) is a non-evaporable getter, the vacuum glass does not comprise an enclosure for enclosing the getter (3), and the enclosure is made of a hermetic material; and
in a direction passing through the cavity (5), the vacuum glass has a thermal conductivity value K less than or equal to 4 W/(m²·K), for example, less than or equal to 3.9W/(m²·K).

In an embodiment, the enclosure is for hermetically enclosing the getter therein to prevent passivation of the getter in the air. Not until the getter enclosed by the enclosure is disposed in the cavity (5) of the vacuum glass and the cavity (5) is in a vacuum and sealed, the hermetic seal of the enclosure in the cavity (5) is broken, from outside of the cavity (5), through the glass body, so that the getter hermetically enclosed by the enclosure is exposed to the environment in the cavity (5). The vacuum glass of the embodiments disclosed by the present application does not contain the above-mentioned enclosure.

In an embodiment, with respect to any one of the vacuum glasses according to the present invention, the vacuum glass does not include a sealed evacuation port.

In an embodiment, with respect to any one of the vacuum glasses according to the present invention, the glass body (1) does not have a sealed evacuation port thereon.

In an embodiment, with respect to any one of the vacuum glasses according to the present invention, the sealant (4) does not have a sealed evacuation port thereon.

In an embodiment, with respect to any one of the vacuum glasses according to the present invention, the vacuum glass has neither an evacuation port thereon nor a sealing device for sealing the evacuation port thereon.

In an embodiment, with respect to any one of the vacuum glasses according to the present invention, the vacuum glass comprises at least two glass bodies (1).

In an embodiment, with respect to any one of the vacuum glasses according to the present invention, the vacuum glass comprises at least three glass bodies (1).

In an embodiment, with respect to any one of the vacuum glasses according to the present invention, adjacent glass bodies (1) are bonded by the sealant (4).

In an embodiment, with respect to any one of the vacuum glasses according to the present invention, the glass body (1) comprises a plate-like glass body.

In an embodiment, with respect to any one of the vacuum glasses according to the present invention, the glass body (1) comprises at least two plate-like glass bodies.

In an embodiment, with respect to any one of the vacuum glasses according to the present invention, the plate-like glass bodies are opposite to each other face to face.

In an embodiment, with respect to any one of the vacuum glasses according to the present invention, the plate-like glass bodies are parallel to each other.

In an embodiment, with respect to any one of the vacuum glasses according to the present invention, the glass body (1) comprises a glass tube.

In an embodiment, with respect to any one of the vacuum glasses according to the present invention, the glass body (1) comprises a glass plate.

In an embodiment, with respect to any one of the vacuum glasses according to the present invention, the glass plate is a planar glass plate or a curved glass plate.

In an embodiment, with respect to any one of the vacuum glasses according to the present invention, a plated film or a pasted file is provided on at least one glass body (1).

In an embodiment, with respect to any one of the vacuum glasses according to the present invention, the glass body (1) has a flat surface.

In an embodiment, with respect to any one of the vacuum glasses according to the present invention, the glass body (1) does not have groove thereon.

In an embodiment, with respect to any one of the vacuum glasses according to the present invention, the glass body (1) does not have blind groove or blind hole thereon.

In an embodiment, with respect to any one of the vacuum glasses according to the present invention, the glass body (1) is formed of silicate glass.

In an embodiment, with respect to any one of the vacuum glasses according to the present invention, the glass body (1) has a softening point higher than 550 °C.

In an embodiment, with respect to any one of the vacuum glasses according to the present invention, the glass body (1) has a softening point higher than 650 °C.

In an embodiment, with respect to any one of the vacuum glasses according to the present invention, the glass body (1) has a softening point higher than 750 °C.

In an embodiment, with respect to any one of the vacuum glasses according to the present invention, the cavity (5) is a plate-like cavity.

In an embodiment, with respect to any one of the vacuum glasses according to the present invention, the vacuum glass comprises at least one cavity (5).

In an embodiment, with respect to any one of the vacuum glasses according to the present invention, the vacuum glass comprises at least two cavities (5).

In an embodiment, with respect to any one of the vacuum glasses according to the present invention, the sealant (4) and the glass body (1) are welded together.

In an embodiment, with respect to any one of the vacuum glasses according to the present invention, the sealant (4) comprises a sealing glass.

In an embodiment, with respect to any one of the vacuum glasses according to the present invention, the sealing glass comprises one or more types of glass selected from the group consisting of a PbO-ZnO-B₂O₃ system, a Bi₂O₃-B₂O₃SiO₂ system, a Bi₂O₃-B₂O₃-ZnO system, a Na₂O-Al2O₃-B₂O₃ system, a SnO-ZnO-P₂O₅ system, a V₂O₅-P₂O₅-Sb₂O₃ system, a ZnO-B₂O₃-SiO₂ system and a ZnO-B₂O₃-BaO system.

In an embodiment, with respect to any one of the vacuum glasses according to the present invention, the sealing glass has a sealing temperature less than 500 °C.

In an embodiment, with respect to any one of the vacuum glasses according to the present invention, the sealing glass has a sealing temperature of 300-450 °C.

In an embodiment, with respect to any one of the vacuum glasses according to the present invention, the sealing glass has a sealing temperature of 400-450 °C.

In an embodiment, with respect to any one of the vacuum glasses according to the present invention, the getter (3) is an activated getter.

In an embodiment, with respect to any one of the vacuum glasses according to the present invention, the getter (3) is capable of absorbing one or more gases selected from the group consisting of O₂, N₂, CO₂, CO and H₂.

In an embodiment, with respect to any one of the vacuum glasses according to the present invention, the getter (3) comprises an elementary substance with gettering ability, an alloy with gettering ability, a compound with gettering ability or a mixture with gettering ability.

In an embodiment, with respect to any one of the vacuum glasses according to the present invention, the getter (3) contains zirconium element or titanium element.

In an embodiment, with respect to any one of the vacuum glasses according to the present invention, the getter (3) contains one or more transition metal elements.

In an embodiment, with respect to any one of the vacuum glasses according to the present invention, the getter (3) contains one or more rare earth metal elements.

In an embodiment, with respect to any one of the vacuum glasses according to the present invention, the getter (3) is a Zr-Al type getter or a Zr-V-Fe type getter.

In an embodiment, with respect to any one of the vacuum glasses according to the present invention, the getter (3) are in the cavity (5) in a density of 0.1g/cm³ or more.

In an embodiment, with respect to any one of the vacuum glasses according to the present invention, the getter (3) are in the cavity (5) in a density of 0.5g/cm³ or more.

In an embodiment, with respect to any one of the vacuum glasses according to the present invention, the getter (3) are in the cavity (5) in a density of 1g/cm³ or more.

In an embodiment, with respect to any one of the vacuum glasses according to the present invention, the getter (3) has an activation temperature less than or equal to the sealing temperature of the sealant (4).

In an embodiment, with respect to any one of the vacuum glasses according to the present invention, the getter (3) can be activated at 300-450 °C.

In an embodiment, with respect to any one of the vacuum glasses according to the present invention, characterized in that,
the getter (3) can be activated by vacuum thermal treatment at 300 °C or more for 1 hour or more, or;
the getter (3) can be activated by heat treatment in vacuum at 350 °C or more for more than 0.5 hours, or;
the getter (3) can be activated by heat treatment in vacuum at 400 °C or more for 10 minutes or more.

In an embodiment, with respect to any one of the vacuum glasses according to the present invention further comprises a support (2) for supporting the glass body (1) to maintain the shape of the cavity (5).

In an embodiment, with respect to any one of the vacuum glasses according to the present invention, the support (2) is disposed in the cavity (5).

In an embodiment, with respect to any one of the vacuum glasses according to the present invention, the support (2) is made of a metallic material or a non-metallic material.

In an embodiment, with respect to any one of the vacuum glasses according to the present invention, the support (2) is a transparent inorganic material.

In an embodiment, with respect to any one of the vacuum glasses according to the present invention, the support (2) is made of glass.

In an embodiment, with respect to any one of the vacuum glasses according to the present invention, the support (2) is a glass sheet.

In an embodiment, with respect to any one of the vacuum glasses according to the present invention, the support (2) is a circular glass sheet, an elliptical glass sheet or a polygonal glass sheet.

In an embodiment, with respect to any one of the vacuum glasses according to the present invention, the vacuum glass is transparent.

In an embodiment, with respect to any one of the vacuum glasses according to the present invention, in at least one direction, more than 85% of a total area of the vacuum glass is transparent.

In an embodiment, with respect to any one of the vacuum glasses according to the present invention, in at least one direction, more than 90% of a total area of the vacuum glass is transparent.

In an embodiment, with respect to any one of the vacuum glasses according to the present invention, in at least one direction, more than 95% of a total area of the vacuum glass is transparent.

In an embodiment, with respect to any one of the vacuum glasses according to the present invention, on the direction passing through the cavity (5), the vacuum glass has a thermal conductivity value K less than or equal to 3 W/(m²·K), for example, less than or equal to 2.9W/(m²·K).

In an embodiment, with respect to any one of the vacuum glasses according to the present invention, on the direction passing through the cavity (5), the vacuum glass has a thermal conductivity value K less than or equal to 2.5 W/(m²·K).

In an embodiment, with respect to any one of the vacuum glasses according to the present invention, on the direction passing through the cavity (5), the vacuum glass has a thermal conductivity value K less than or equal to 2 W/(m²·K), for example, less than or equal to 1.9W/(m²·K).

In an embodiment, with respect to any one of the vacuum glasses according to the present invention, on the direction passing through the cavity (5), the vacuum glass has a thermal conductivity value K less than or equal to 1.8 W/(m²·K).

In an embodiment, with respect to any one of the vacuum glasses according to the present invention, on the direction passing through the cavity (5), the vacuum glass has a thermal conductivity value K less than or equal to 1.6 W/(m²·K), for example, less than or equal to 1.5W/(m²·K).

In an embodiment, with respect to any one of the vacuum glasses according to the present invention, on the direction passing through the cavity (5), the vacuum glass has a thermal conductivity value K less than or equal to 1.4 W/(m²·K).

In an embodiment, with respect to any one of the vacuum glasses according to the present invention, on the direction passing through the cavity (5), the vacuum glass has a thermal conductivity value K less than or equal to 1.2 W/(m²·K).

In an embodiment, with respect to any one of the vacuum glasses according to the present invention, on the direction passing through the cavity (5), the vacuum glass has a thermal conductivity value K less than or equal to 1 W/(m²·K), for example, less than or equal to 0.9W/(m²·K).

In an embodiment, with respect to any one of the vacuum glasses according to the present invention, on the direction passing through the cavity (5), the vacuum glass has a thermal conductivity value K less than or equal to 0.8 W/(m²·K).

In an embodiment, with respect to any one of the vacuum glasses according to the present invention, on the direction passing through the cavity (5), the vacuum glass has a thermal conductivity value K less than or equal to 0.6 W/(m²·K).

In an embodiment, with respect to any one of the vacuum glasses according to the present invention, on the direction passing through the cavity (5), the vacuum glass has a thermal conductivity value K of 0.5-1 W/(m²·K).

In an embodiment, with respect to any one of the vacuum glasses according to the present invention, on the direction passing through the cavity (5), the vacuum glass has a sound insulation value R_{w}+Cₜᵣ of 10dB or more.

In an embodiment, with respect to any one of the vacuum glasses according to the present invention, on the direction passing through the cavity (5), the vacuum glass has a sound insulation value R_{w}+Cₜᵣ of 20dB or more.

In an embodiment, with respect to any one of the vacuum glasses according to the present invention, on the direction passing through the cavity (5), the vacuum glass has a sound insulation value R_{w}+Cₜᵣ of 30dB or more.

In an embodiment, with respect to any one of the vacuum glasses according to the present invention, on the direction passing through the cavity (5), the vacuum glass has a sound insulation value R_{w}+Cₜᵣ of 30-35dB.

In an embodiment, with respect to any one of the vacuum glasses according to the present invention, a thickness direction of the vacuum glass is a direction passing through the cavity (5)

In an embodiment, with respect to any one of the vacuum glasses according to the present invention, in at least one direction, the glass body (1) has a size greater than or equal to 0.01m.

In an embodiment, with respect to any one of the vacuum glasses according to the present invention, in at least one direction, the glass body (1) has a size greater than or equal to 0.05m.

In an embodiment, with respect to any one of the vacuum glasses according to the present invention, in at least one direction, the glass body (1) has a size greater than or equal to 0.1m.

In an embodiment, with respect to any one of the vacuum glasses according to the present invention, in at least one direction, the glass body (1) has a size greater than or equal to 0.3m.

In an embodiment, with respect to any one of the vacuum glasses according to the present invention, in at least one direction, the glass body (1) has a size greater than or equal to 0.5m.

In an embodiment, with respect to any one of the vacuum glasses according to the present invention, in at least one direction, the glass body (1) has a size greater than or equal to 1m.

In an embodiment, with respect to any one of the vacuum glasses according to the present invention, on two directions perpendicular to each other, the glass body (1) has a size greater than or equal to 0.01m × 0.01m.

In an embodiment, with respect to any one of the vacuum glasses according to the present invention, on two directions perpendicular to each other, the glass body (1) has a size greater than or equal to 0.1m × 0.1m.

In an embodiment, with respect to any one of the vacuum glasses according to the present invention, on two directions perpendicular to each other, the glass body (1) has a size greater than or equal to 0.3m × 0.3m.

In an embodiment, with respect to any one of the vacuum glasses according to the present invention, on two directions perpendicular to each other, the glass body (1) has a size greater than or equal to 0.5m × 0.5m.

In an embodiment, with respect to any one of the vacuum glasses according to the present invention, on two directions perpendicular to each other, the glass body (1) has a size greater than or equal to 1m × 1m.

In an embodiment, with respect to any one of the vacuum glasses according to the present invention, the vacuum glass has a thickness of 1-50mm.

In an embodiment, with respect to any one of the vacuum glasses according to the present invention, the vacuum glass has a thickness of 5-25mm.

In an embodiment, with respect to any one of the vacuum glasses according to the present invention, the glass body (1) has a thickness of 1-20mm.

In an embodiment, with respect to any one of the vacuum glasses according to the present invention, the glass body (1) has a thickness of 5-10mm.

In an embodiment, with respect to any one of the vacuum glasses according to the present invention, the cavity (5) has a thickness less than 3mm.

In an embodiment, with respect to any one of the vacuum glasses according to the present invention, the cavity (5) has a thickness less than 1mm.

In an embodiment, with respect to any one of the vacuum glasses according to the present invention, the cavity (5) has a thickness less than 0.5mm.

In an embodiment, with respect to any one of the vacuum glasses according to the present invention, the cavity (5) has a thickness less than 0.1mm.

In an embodiment, with respect to any one of the vacuum glasses according to the present invention, the cavity (5) has a thickness less than 0.05mm.

In an embodiment, with respect to any one of the vacuum glasses according to the present invention, in at least one direction, the cavity (5) has a size greater than or equal to 0.1m.

In an embodiment, with respect to any one of the vacuum glasses according to the present invention, in at least one direction, the cavity (5) has a size greater than or equal to 0.5m.

In an embodiment, with respect to any one of the vacuum glasses according to the present invention, in at least one direction, the cavity (5) has a size greater than or equal to 1m.

In an embodiment, with respect to any one of the vacuum glasses according to the present invention, the cavity (5) has an absolute pressure less than or equal to 1×10⁻⁴Pa.

In an embodiment, with respect to any one of the vacuum glasses according to the present invention, the cavity (5) has an absolute pressure less than or equal to 1×10⁻³Pa.

In an embodiment, with respect to any one of the vacuum glasses according to the present invention, the cavity (5) has an absolute pressure less than or equal to 1×10⁻²Pa.

In an embodiment, with respect to any one of the vacuum glasses according to the present invention, the cavity (5) has an absolute pressure less than or equal to 1×10⁻¹Pa.

A second aspect of the present invention provides a door or a window, comprising any one of the vacuum glasses according to the present invention.

In an embodiment, according to the door or a window of any one of the present inventions, the door or a window is a door or a window of a building, a door or a window of a structure, a door or a window of a vehicle, a door or a window of refrigeration equipment, a door or a window of thermal insulation equipment or a door or a window of sound insulation equipment.

Yet another aspect of the present invention provides a greenhouse (e.g., a greenhouse shed), wherein an outer wall of the greenhouse comprises with respect to any one of the vacuum glasses according to the present invention.

A third aspect of the present invention provides an instrument or a meter, comprising any one of the vacuum glasses according to the present invention.

A fourth aspect of the present invention provides a solar collector, comprising any one of the vacuum glasses according to the present invention.

A fifth aspect of the present invention provides a method for preparing vacuum glass as defined in independent claim 1.

In an embodiment, with respect to any one of the methods according to the present invention, in step i), the getter is passivated getter.

In an embodiment, with respect to any one of the methods according to the present invention, in step i), a surface of the getter does not comprise an enclosure, which is made of a hermetic material.

In an embodiment, with respect to any one of the methods according to the present invention, step i) further comprises disposing a support for supporting the glass body in the cavity.

In an embodiment, with respect to any one of the methods according to the present invention, step i) further comprises shaping a sealant into a desired shape in a mold.

In an embodiment, with respect to any one of the methods according to the present invention, in step i), the sealant is sealing glass.

In an embodiment, with respect to any one of the methods according to the present invention, in step ii), heating is performed at a temperature greater than or equal to a sealing temperature of the sealant.

In an embodiment, with respect to any one of the methods according to the present invention, in step ii), heating is performed at a temperature greater than or equal to an activation temperature of the getter.

In an embodiment, with respect to any one of the methods according to the present invention, in step ii), the heating is performed for a period greater than or equal to the activation time of the getter.

In an embodiment, with respect to any one of the methods according to the present invention, in step ii), heating is performed at a temperature of 300-600 °C.

In an embodiment, with respect to any one of the methods according to the present invention, in step ii), heating is performed at a temperature of 400-500 °C.

In an embodiment, with respect to any one of the methods according to the present invention, in step ii), the vacuum environment has an absolute pressure value less than or equal to 1×10⁻¹Pa.

In an embodiment, with respect to any one of the methods according to the present invention, in step ii), the vacuum environment has an absolute pressure value less than or equal to 1×10⁻²Pa.

In an embodiment, with respect to any one of the methods according to the present invention, in step ii), the vacuum environment has an absolute pressure value less than or equal to 1×10⁻³Pa.

In an embodiment, with respect to any one of the methods according to the present invention, in step ii), the vacuum environment has an absolute pressure value less than or equal to 1×10⁻⁴Pa.

In an embodiment, with respect to any one of the methods according to the present invention, the vacuum glass is with respect to any one of the vacuum glasses according to the present invention.

In an embodiment, the sealant is sealing glass.

The sealing glass and the glass body have similar surface properties, thereby they are firmly bonded, besides, they have similar expansion coefficients, thereby they are unlikely to be separated under temperature shock.

In an embodiment, glass is an inorganic melt that does not substantially crystallize during solidification.

In an embodiment, the glass is an amorphous solid with mechanical solid properties which is resulted from an overcooled melt with an increased viscosity.

In an embodiment, the glass is any glass disclosed in the Manual of Glass Materials (Wang Chengyu, Tao Ying. Manual of Glass Materials [M]. Chemical Industry Press, 2008.), for example, any glass disclosed in Chapter 1, Section 1.3 "Variety of Glass" of the book.

In an embodiment, glass comprises one or more selected from element glass, oxide glass, fluoride glass, chloride glass, bromide glass, iodide glass, chalcogenide glass, halogen chalcogenide glass, nitrate glass, sulfate glass and acetate glass.

In an embodiment, oxide glass comprises one or more selected from one-component oxide glass, silicate glass, borate glass, borosilicate glass, aluminate glass, aluminum borate glass, phosphate glass, boric phosphate glass, aluminum phosphate glass, titanate glass, titanium silicate glass, tellurite glass, germanate glass, antimonate glass, arsenate glass and gallate glass.

In an embodiment, the glass body comprises one or more compounds selected from the group consisting of silica, magnesium oxide, calcium oxide, barium oxide, lithium oxide, sodium oxide, potassium oxide, boron oxide, vanadium oxide, zinc oxide, tellurium oxide, aluminum oxide, lead oxide, tin oxide, phosphorus oxide, ruthenium oxide, rhodium oxide, iron oxide, copper oxide, titanium oxide, tungsten oxide, bismuth oxide, antimony oxide, lead borate glass, stannic phosphate glass, vanadate glass and borosilicate glass.

In an embodiment, the glass body is made of a first glass, and the sealant is made of a second glass.

In an embodiment, the glass body has a softening point temperature higher than that of the sealing glass.

In an embodiment, the softening point temperature refers to the temperature at which the viscosity of the glass cannot support the glass anymore, resulting in deformation.

In an embodiment, the softening point temperature is measured in accordance with GB T 28195-2011 "Glass Softening Point Test Method".

In an embodiment, the sealing temperature refers to a temperature at which the sealing glass is melted in a vacuum state to be welded with the glass body.

In an embodiment, the sealing temperature, also referred to as the seal temperature, refers to a temperature at which the glass viscosity reaches 10³Pa·s.

In an embodiment, the glass body has a softening point temperature higher than the sealing temperature of the sealing glass by 50 °C or more, for example, 100 °C or more, for example, 150 °C or more, as another Example, 200 °C or more, as another Example, 250 °C or more, as another Example, 300 ° C, as another Example, 350 °C or more, as another Example, 400 °C or more, as another Example, 500 °C or more, and as another Example, 600 °C or more.

In an embodiment, the glass body has a softening point temperature greater than or equal to 300 ° C, for example, greater than or equal to 350 ° C, as another Example, greater than or equal to 400 ° C, as another Example, greater than or equal to 450 ° C, as another Example, greater than or equal to 500 ° C, as another Example, greater than or equal to 550 ° C, as another Example, greater than or equal to 600 ° C, as another Example, greater than or equal to 650 ° C, as another Example, greater than or equal to 700 ° C, and as another Example, greater than or equal to 750 ° C.

In an embodiment, the sealing glass can also be referred to as welding glass, welding flux glass, solder glass, sealing glass, glass powder with low melting point, low melting point glass or enamel frit, or the like.

In an embodiment, the sealing glass is low temperature glass or low melting point glass.

In an embodiment, the sealing glass has a sealing temperature less than or equal to 600 ° C, as another Example, less than or equal to 550 ° C, as another Example, less than or equal to 500 ° C, as another Example, less than or equal to 490 ° C, as another Example, less than or equal to 480 ° C, as another Example, less than or equal to 470 ° C, as another Example, less than or equal to 460 ° C, as another Example, less than or equal to 450 ° C, as another Example, less than or equal to 440 ° C, as another Example, less than or equal to 430 ° C, as another Example, less than or equal to 420 ° C, as another Example, less than or equal to 410 ° C, as another Example, less than or equal to 400 ° C, as another Example, less than or equal to 380 ° C, as another Example, less than or equal to 360 ° C, and as another Example, less than or equal to 340 ° C.

In an embodiment, the sealing glass is any low melting point glass disclosed in Manual of Glass Materials (Wang Chengyu, Tao Ying. Manual of Glass Materials [M]. Chemical Industry Press, 2008.), for example, any welding flux glass disclosed in Chapter 12, Section 12.4, "Welding Flux Glass".

In an embodiment, the sealing glass comprises non-oxide glass (e.g., chalcogenide glass or a fluoride glass), oxide glass, or hybrid glass (e.g., oxysulfuric glass).

In an embodiment, the sealing glass comprises lead-contained borate glass, lead-contained borosilicate glass or lead-contained silicate glass.

In an embodiment, the sealing glass comprises one or more compounds selected from magnesium oxide, calcium oxide, barium oxide, lithium oxide, sodium oxide, potassium oxide, boron oxide, vanadium oxide, zinc oxide, tellurium oxide, aluminum oxide, silicon dioxide, lead oxide, tin oxide, phosphorus oxide, ruthenium oxide, rhodium oxide, iron oxide, copper oxide, titanium oxide, tungsten oxide, bismuth oxide, antimony oxide, lead borate glass, tin phosphate glass, vanadate glass and borosilicate glass.

In an embodiment, the sealing glass comprises one or more types of glass selected from a PbO-ZnO-B₂O₃ system, a Bi₂O₃-B₂O₃-SiO₂ system, a Bi₂O₃-B₂O₃-ZnO system, a Na₂O-Al₂O₃-B₂O₃ system, a SnO-ZnO-P₂O₅ system, a V₂O₅-P₂O₅-Sb₂O₃ system, a ZnO-B₂O₃-SiO₂ system and a ZnO-B₂O₃-BaO system.

In an embodiment, any one of the vacuum glasses, the sealant does not include a metal.

In an embodiment, any one of the vacuum glasses, the sealant does not include a metal simple substance or an alloy.

In an embodiment, any one of the vacuum glasses, the sealant does not include an organic matter, such as a resin, and as another Example, organic gum.

In an embodiment, the enclosure for enclosing the getter refers to a metal shell, a glass shell, or an infrared-absorbing-material shell.

In an embodiment, the non-evaporable getter refers to a getter capable of achieving gettering characteristics without evaporating the getter.

In an embodiment, the activation of the getter refers to make the getter exhibit the gettering characteristics via a vacuum thermal treatment method.

In an embodiment, the getter is a non-evaporable getter, for example, the non-evaporable getter disclosed in the literature "Jiang Dikui, Chen Liping. Performance characteristics and practical application problems of non-evaporable getter (NEG) [J]. Vacuum, 2004, 41 (4): 88-93".,

In an embodiment, the getter contains a Zr element.

In an embodiment, the getter contains a Ti element.

In an embodiment, the getter contains one or more of transition metal elements. The transition metal elements include, for example, Sc, Ti, V, Cr, Mn, Fe, Co, Ni, Y, Zr, Nb, Mo, Tc, Ru, Rh, Pd, La, Hf, Ta, W, Re, Os, Ir, Pt and Ac.

In an embodiment, the getter contains one or more of rare earth metal elements. The rare earth metal elements include, for example, lanthanum (La), cerium (Ce), praseodymium (Pr), neodymium (Nd), promethium (Pm), samarium (Sm), europium (Eu), gadolinium (Gd), terbium (Tb), dysprosium (Dy), holmium (Ho), erbium (Er), thulium (Tm), ytterbium (Yb), lutecium (Lu), (Sc) and yttrium (Y).

In an embodiment, the getter is a Zr-type getter, such as, a Zr-Al type, Zr -Ni type, Zr-C type, Zr-Co-RE type (RE refers to a rare earth element) or Zr-V-Fe type getter.

In an embodiment, the getter is a Ti-type getter, such as, a Ti-Mo type or a Ti-Zr-V type getter.

The vacuum glass in an embodiment does not have evacuation port, and this vacuum glass without the evacuation port has a relatively complete overall structure, a relatively pretty appearance and has better safety and stability. In addition, the vacuum glass without the evacuation port has a complete surface, which is good for further processing, and the vacuum glass can be further processed into special glass such as laminated glass, film mounted glass and the like to meet the needs of different uses.

In an embodiment, the evacuation port is also referred to as an evacuation hole, an evacuation port or an evacuation vent, etc.

In an embodiment, with respect to any one of the vacuum glasses, the evacuation port refers to an opening that remains on the glass body or the sealing glass after the glass body is hermetically sealed with the sealant (such as sealing glass). The cavity of the vacuum glass must be vacuumed through the evacuation port, and then the evacuation port is blocked by a plugging object.

In an embodiment, the gap between the glass bodies sealed by the sealant is not a blocked evacuation port.

JC/T 1709-2008 "Vacuum Glass" discloses a vacuum glass, as for the vacuum glass, two or more glass plates are spaced apart by a support, with their peripheries being sealed to form a glass product with a vacuum layer between the glass. The vacuum glass comprises a blocked air evacuation port and a protection device (protection cap) attached to the evacuation port of the vacuum glass.

CN203923018U discloses a vacuum glass with an evacuation port on a periphery, the vacuum glass comprises two or more glass plates, a metallized layer is arranged on a to-be-sealed portion on the glass. A hermetic connection between two adjacent glass is achieved through a metallic edge seal, with an evacuation port reserved on the to-be-sealed position, with a sealing member arranged in the evacuation port, and the sealing member is combined with the metallized layer to realize the hermetic sealing of the evacuation port. The vacuum glass has an evacuation port formed on a periphery of the vacuum glass, in particular, the evacuation port being reserved on a sealing tape and is sealed by the sealing member after the evacuation is completed, which is different from the conventional manner of forming the evacuation port on the glass surface.

CN104291632A discloses an evacuation port of a vacuum glass, characterized in that the evacuation port is formed by perforating the upper glass plate of the vacuum glass, a sealing ring is manufactured on a lower surface of the upper glass plate around the evacuation port, a sealing box is disposed at a position corresponding to the evacuation port on the upper surface of the lower glass, and the sealing ring can be inserted into the sealing box; after the upper glass and the lower glass are sealed, a metal welding flux is disposed in the evacuation port, the evacuation port is in a vacuumed and heated, so that the metal welding flux is melted into liquid, the liquid remains in the sealing box, the sealing ring is also submerged in the liquid, the evacuation port is self-sealed according to the liquid sealing principle, in which the liquid solidifies after being cooled, so as to achieve hermetic sealing of the evacuation port.

In an embodiment, any one of the vacuum glasses does not include the evacuation port described in JC/T 1079-2008.

In an embodiment, any one of the vacuum glasses does not include the evacuation port described in CN203923018U, CN104291632A or CN104108862A.

In an embodiment, any one of the vacuum glasses, the vacuum glass is entirely subjected to a thermal treatment in vacuum to complete the vacuuming of the cavity, the activation of the getter, and the welding of the glass body and the sealing glass.

In an embodiment, any one of the vacuum glasses, the support is made of a metallic material or a non-metallic material.

In an embodiment, with respect to any one of the vacuum glasses according to the present invention, the metallic material is one or more selected from steel, aluminum alloy, nickel, molybdenum and niobium.

In an embodiment, the metallic material may be chromium or copper.

In an embodiment, with respect to any one of the vacuum glasses according to the present invention, the non-metallic material is one or more selected from glass, ceramics and metal oxides.

In an embodiment, the non-metallic material may be nylon, graphite, quartz glass or sapphire glass.

In an embodiment, the method for detecting the thermal conductivity and the sound insulation performance of the vacuum glass is according to "vacuum glass" (JC/T1079-2008).

In the present invention, the degree of vacuum is measured by the absolute pressure value, and a high degree of vacuum or a small degree of vacuum indicates a low absolute pressure value; and a low degree of vacuum or a large degree of vacuum indicates a high absolute pressure value.

The inventor finds that, when being heated in vacuum, the sealing glass (low melting points glass) melts and softens, and generates a large amount of gas, with bubbles forming in the softened sealing glass. At this time, the sealing glass not only releases the gas to the outside of the cavity of the vacuum glass, but also releases the gas into the vacuum cavity of the vacuum glass. The gas released from the sealing glass to the outside of the cavity is discharged by a vacuum pump; and since the a sealed cavity is enclosed by the melted glass powder and the upper and lower glass plates, the gas released from the sealing glass to the cavity cannot be discharged, resulting in increase of pressure of the sealed cavity of the vacuum glass, low degree of vacuum, and the excellent attributes of high thermal insulation and sound insulation of the vacuum glass, which differs it from hollow glass, are lost.

The method for preparing the vacuum glass of the present invention comprises a step of observing if there are bubbles in the sealing glass during the heating and reducing the temperature increasing speed or stopping the temperature increase in an initial bubble-forming stage. This step can avoid excessive bubbling of the sealing glass which releases gas, thereby favoring obtaining a vacuum glass with a high degree of vacuum. Otherwise, if the excessive bubbling happens, even if a sufficient amount of getter is added, the vacuum glass with thermal insulation and sound insulation effects that different from those of the hollow glass cannot be obtained.

In an embodiment, in step ii), heating is stopped at an initial bubble-forming stage of the sealant (e.g., the sealing glass).

The inventor further finds that, when more getter is added into the cavity at a edge seal stage of the vacuum glass, a vacuum glass with a higher degree of vacuum can be obtained.

In an embodiment, with respect to any one of the vacuum glasses according to the present invention, the cavity (5) has a content of said getter (3) of 0.1g/cm³ or more, for example, 0.5g/cm³ or more, as another Example, 1g/cm³ or more, and as another Example, 1.5g/cm³ or more.

In an embodiment, with respect to any one of the vacuum glasses according to the present invention, the cavity (5) has a volume of about 300-350cm³ (e.g., 330cm³), and the getter has a weight of 600-700g (e.g., 640g).

In an embodiment, with respect to any one of the vacuum glasses according to the present invention, the cavity (5) has a volume of about 300-350cm³ (e.g., 330cm³), and the getter has a volume of10-15cm³ (e.g., 12cm³).

In an embodiment, with respect to any one of the vacuum glasses according to the present invention, the getter has a weight of 600-700g (e.g., 640g) per 300-350cm³ (e.g., 330cm³) of the cavity volume.

In an embodiment, with respect to any one of the vacuum glasses according to the present invention, the getter has a volume of 10-15cm³ (e.g., 12cm³) per 300-350cm³ (e.g., 330cm³) of the cavity volume.

In an embodiment, according to the vacuum glass or the method for preparing the vacuum glass of the present invention, the getter has a mass of being positively correlated with the total area of the vacuum glass.

In an embodiment, according to the vacuum glass or the method for preparing the vacuum glass of the present invention, the getter has a mass of being positively correlated with a side length of the vacuum glass sealed by the sealant.

The inventor also finds that the getter is disposed at a position close to the sealant, thereby favoring obtaining a vacuum glass with a higher degree of vacuum.

In an embodiment, according to the vacuum glass or the method for preparing the vacuum glass of the present invention, the getter is disposed at a position close to the inner side of the sealant.

In an embodiment, according to the vacuum glass or the method for preparing the vacuum glass of the present invention, the distance from the getter to the sealant is 10cm or less, for example, 5cm or less.

The inventor finds that the vacuum glass in which an elastic gasket serves as the support has a smaller thickness deviation.

In an embodiment, the support is an elastic gasket, such as a stainless steel elastic gasket.

In an embodiment, the elastic gasket is an elastic washer, such as a C-shaped elastic washer, a saddle-shaped elastic washer or a wave-shaped elastic washer or a disc-shaped spring washer.

In an embodiment, the elastic gasket (e.g., the elastic washer) is made of carbon fibers, graphite nylon (aps), steel (e.g., medium carbon steel, 65Mn, SK5, SK7, stainless steel, such as SUS304 stainless steel), aluminum, copper (e.g., red copper, beryllium copper, bronze) or chromium.

Fig.14 is a front view (left) and a side view (right) of the C-shaped elastic washer.

In an embodiment, the height of the elastic gasket is 0.1-1.0mm, such as 0.7mm.

The inventor finds that, when preparing a vacuum glass, a wide effective edge seal width, for example 10mm, can be obtained, if, at the solidification stage of the sealing glass, the pressure in the furnace is reduced to atmospheric pressure firstly, and then the temperature in the furnace is lowered to 50 °C or less.

In an embodiment, the step iii) of the method for preparing the vacuum glass comprises reducing the degree of vacuum and the temperature in the furnace, by reducing the pressure in the furnace to atmospheric pressure firstly, and subsequently lowering the temperature in the furnace to 50 °C or less, and then opening the furnace to obtain a product.

In an embodiment, the step iii) of the method for preparing the vacuum glass comprises reducing the degree of vacuum and the temperature in the furnace; by reducing the pressure in the furnace to atmospheric pressure when the sealant is still in a semi-solid state, subsequently lowering the temperature in the furnace to a solidification temperature of the sealant, and then opening the furnace to obtain the product.

In an embodiment, the step iii) of the method for preparing the vacuum glass comprises reducing the degree of vacuum and the temperature in the furnace; by reducing the pressure in the furnace to atmospheric pressure within 5 to 10 minutes, lowering the temperature in the furnace to 50 °C or less within 10 to 12 hours, and then opening the furnace to obtain the product.

The Examples of the present invention are further described below in combination with specific embodiments.

### Example 1

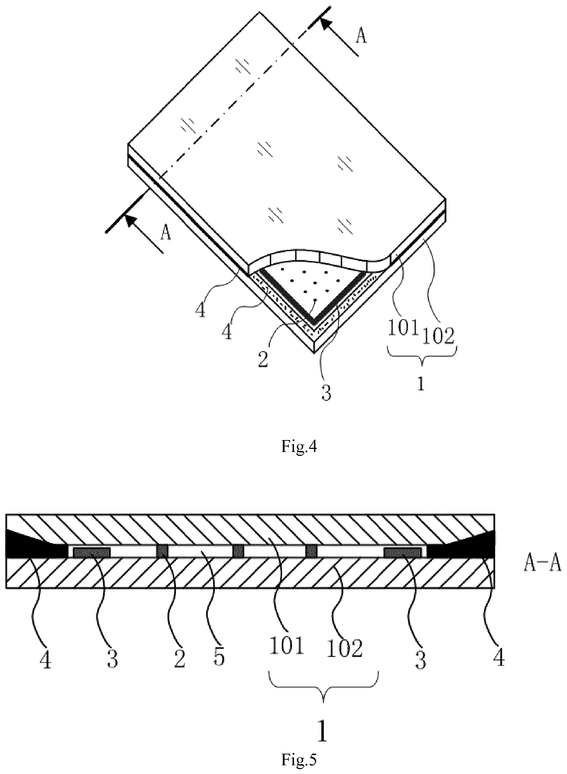

Fig.4 is a perspective view of the vacuum glass of Example 1, and Fig.5 is an A-A sectional view of the vacuum glass of Fig.4. Referring to the figures:
The vacuum glass product of Example 1 comprises two glass bodies 1, which are two low-E glass plates 101 and 102 arranged parallel to each other; a cavity 5 enclosed by the low-E glass plates 101 and 102 and a sealant 4 (i.e., a sealing glass) together; as well as supports 2 and getters 3, which are disposed in the cavity 5; the cavity 5 is hermetic therein; the getter 3 is a non-evaporable getter, and the vacuum glass does not comprise an enclosure for enclosing the getter 3, and the enclosure is made of a hermetic material. The vacuum glass does not have a blocked evacuation port.

The preparation steps of the aforementioned vacuum glass are as follows:
1. Providing glass plates: providing two low-E glass (low-emissivity glass) plates 101 and 102, with sizes of 1m × 1m × 5mm.

A face of the low-E glass plate has a coated film thereon, and in order to improve the bonding strength between the glass plate and the sealing glass, the coated film on the regions to be connected with the sealing glass was ground off from the face of the low-E glass plate. In the present example, 10mm width of the film along the periphery of the coated film faces of the low-E glass plates 101 and 102 is ground off.

2. Disposing the sealant: the sealant 4 is a sealing glass. JN-48 type glass powder from Beijing Beixu Electronic Glass Co., Ltd, having a sealing temperature of 410-430°C, is used. Substantially horizontally disposing the low-E glass plate 102, with the film coated face facing upward, and coating a glass powder slurry on the region close to the periphery of the surface, and then drying the glass powder slurry so as to make it dry and formed into a shape.

3. Disposing supports: the supports 2 are circular thin glass sheets having sizes of ϕ1mm×0.33mm. Disposing A plurality of supports 2 on the film coated face of the low-E glass plate 102 at an interval of 30mm × 30mm.

4. Disposing the getter: the getters 3 is strip shaped getter strips (Liaoning Kehua Gettering Material Co., Ltd., model number ZV8J60Q, ingredients: zirconium, vanadium and iron, the activation condition is 400°C/5min), having sizes of about 0.3mm × 10mm × 970mm, and weights of about 160g/strip. Disposing four getter strips on the film coated face of the low-E glass plate 102, with the four getter strips being parallel to the four sides of the glass plate respectively and being disposed at positions close to the inner side of the sealant 4.

5. Stacking: Stacking the low-E glass plate 101 on the low-E glass plate 102, so that the low-E glass plates 101, 102 and the sealant 4 (the sealing glass) together enclose a plate-like cavity, the film coated face of the low-E glass plate 101 facing the plate-like cavity.

6. heating and packaging in vacuum: disposing the stacked glass plates in a vacuum furnace, and performing the following operations:
(1) evacuating a vacuum furnace, so that the degree of vacuum (absolute pressure value) in the furnace is less than or equal to 1×10⁻⁴Pa;
(2) keeping the degree of vacuum (absolute pressure value) in the furnace less than or equal to 1×10⁻⁴Pa, and heating the vacuum furnace with a temperature increasing speed of about 1-5°C/min, and when the temperature reaches about 410-430°C, observing if there are bubbles forming in the sealing glass, and reducing the temperature increasing speed or stopping the temperature increase in an initial bubble-forming stage, so as to prevent excessive bubbling, and preserving heat for 5-10min; getters are activated in step 2);
(3) reducing the degree of vacuum and the temperature in the furnace. Reducing the pressure in the furnace to atmospheric pressure within 5-10min, reducing the temperature in the furnace to 50°C or less in 10~12h, and then opening the furnace to obtain the vacuum glass.

### Example 2

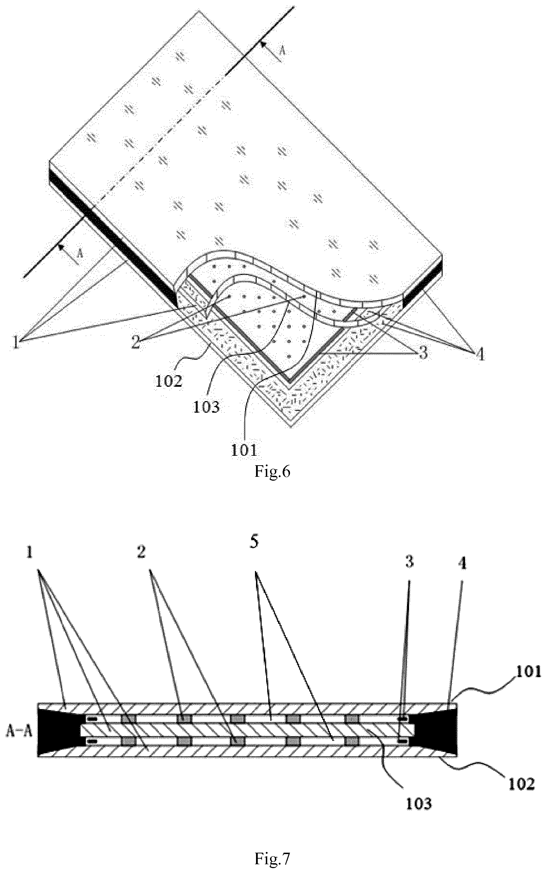

Fig.6 is a perspective view of the vacuum glass of Example 2, and Fig.7 is an A-A sectional view of the vacuum glass of Fig.6. Referring to the figures:
The vacuum glass of Example 2 comprises three glass bodies 1, which are low-E glass plates 101 and 102 arranged parallel to each other and a uncoated glass plate 103, the uncoated glass plate 103 being disposed between the low-E glass plates 101 and 102; and a cavity 5 enclosed by the low-E glass plate 102, the uncoated glass plate 103 and a sealant 4 (a sealing glass) together, and another cavity 5 enclosed by the uncoated glass plate 103, the low-E glass plate 101 and a sealant 4 (a sealing glass) together; and supports 2 and getters 3, which are disposed in the both cavities 5. The cavity 5 is hermetic therein; the getters 3 are non-evaporable getters, and the vacuum glass does not comprise an enclosure for enclosing the getters 3. The enclosure is made of a hermetic material. The vacuum glass does not have a blocked evacuation port.

Steps for preparing the aforementioned vacuum glass are as follows:
1. Preparing glass bodies 1 (glass plates): preparing two tempered low-E (low-emissivity coated) glass plates 101 and 102, with sizes of 1m × 1m × 5mm, and an uncoated tempered glass plate 103, with a size of 990mm × 990mm × 5mm.

10mm width of the coated films along the periphery of the two low-E glass plates 101 and 102 are ground off.

2. Disposing supports and stacking the glass plates

Substantially horizontally disposing a low-E glass plate 102.

Disposing the supports on the film coated face of the glass plate. The supports are spring rings, which are made by bending 304L stainless steel wires having a diameter of 0.35mm, and the size of the spring rings are as follows: the inner diameter is 0.35mm, the outer diameter is 1.05mm, and the height is 0.35mm. The placement interval of the supports is 40mm × 40mm.

Disposing the uncoated glass plate 103 on the low-E glass plate 102, on which the supports has been disposed, with their centers aligned. Disposing supports on the glass plate 103, with a placement interval of 40mm × 40mm.

Disposing the coated low-E glass plate 101 on the glass 103 on which the supports had been disposed. The glass 101 is disposed with its film coated face facing the glass 103. Thus, a space with a height of 5.70mm and a width of 5mm is formed along the peripheries of the glass plates 101, 102, and 103, which is to be used later.

3. Disposing the getter: the getter 3 was a strip shaped zirconium-vanadium-iron getter from Italian Seth Company, with a model number of ST2002/CTS/NI/8D Strip, and an activation condition of 400°C/5min. The strip shaped zirconium-vanadium-iron getter has a specification of 0.3mm × 8mm × 970mm and a weight of 150g/strip. 8 strip shaped zirconium-vanadium-iron getters were provided for later use. Disposing 4 sheets of strip shaped zirconium-vanadium-iron getters on the four edges between glass 102 and 103 respectively, and disposing 4 sheets of strip shaped zirconium-vanadium-iron getters on the four edges between the glass 101 and 103 respectively, the 8 sheets of strip shaped zirconium-vanadium-iron getters being disposed 5mm away from the periphery of the glass plate 103.

4. Disposing the sealant: the sealant 4 is a sealing glass. BDH-0118 type glass powder from Beijing Beixu Electronic Material Co., Ltd was used, whose sealing temperature is 430°C. The aforementioned glass powder was made into a glass powder strip. The specification of the glass powder strip is 6mm × 8mm × 1m, and 4 glass powder strips were prepared for later use. Disposing glass powder strips with a height of 8mm between the glass 101 and 102.

5. heating and packaging in vacuum: disposing the stacked glass plates in a vacuum furnace, and performing the following operations:
(1) evacuating a vacuum furnace, so that the degree of vacuum (absolute pressure value) in the furnace is less than or equal to 1×10⁻⁴Pa;
(2) keeping the degree of vacuum (absolute pressure value) in the furnace less than or equal to 1×10⁻⁴Pa, and heating the vacuum furnace, with a temperature increasing speed of about 1-5°C/min, when the temperature reaches about 430°C, observing if there are bubbles forming in the sealing glass, and reducing the temperature increasing speed or stopping the temperature increase in an initial bubble-forming stage, so as to prevent excessive bubbling, and preserving heat for 5-10min; the getter was activated in step 2); and
(3) reducing the degree of vacuum and the temperature in the furnace, reducing the pressure in the furnace to atmospheric pressure within 5-10min, reducing the temperature in the furnace to 50°C or less in 10-12h, and then opening the furnace to obtain the vacuum glass.

### Example 3 (a vacuum glass with a fixed through hole)

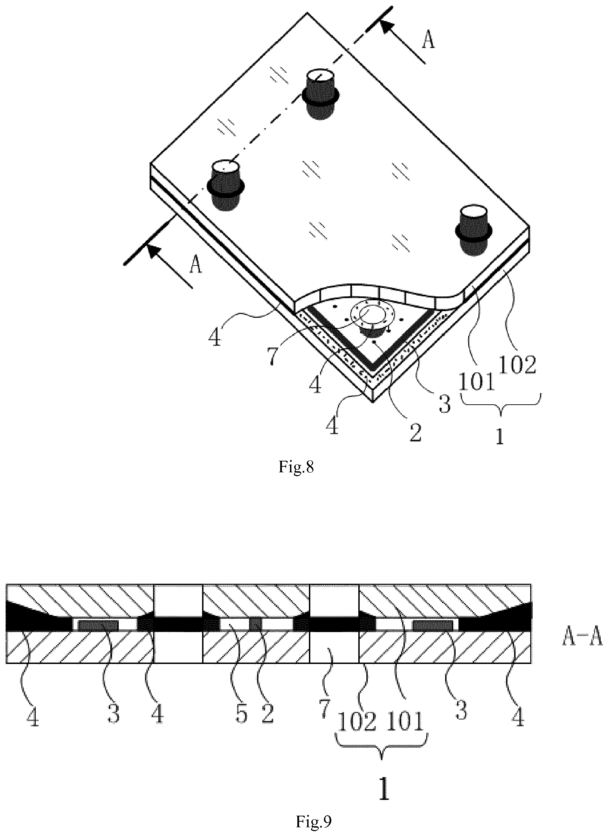

Fig.8 is a perspective view of the vacuum glass of Example 3, Fig.9 is an A-A sectional view of the vacuum glass of Fig.8, and referring to the figures:
The vacuum glass product of Example 3 comprises two glass bodies 1, which are two low-E glass plates 101 and 102, having sizes of 1m × 1m × 5mm, being arranged parallel to each other, and having a 0.35mm gap therebetween; a cavity 5 enclosed by the low-E glass plates 101 and 102 and a sealant 4 (a sealing glass) together; and supports 2 and getters 3 disposed in the cavity 5. The vacuum glass of Example 3 is provided with a through hole 7 penetrating through the entire vacuum glass. The cavity 5 is hermetic therein; the getters 3 is non-evaporable getters, the vacuum glass does not comprise an enclosure for enclosing the getters 3, the enclosure is made of a hermetic material. The vacuum glass does not have a blocked evacuation port.

The preparation steps are as follows:
1. preparing the glass bodies 1 (glass plates): preparing two sheets of tempered low-E (low emissivity glass) glass 101 and 102 with sizes of 1m × 1m × 5mm. Four through holes 7 are respectively formed on each of the four corners of the two low-E glass plates, with a hole diameter of 1.8cm (any hole diameter can be made if needed). The film on the regions close to the periphery of the two low-E glass plate and the film on the on the regions surrounding the four through holes 7 are ground off.
2. Disposing the sealant: substantially horizontally disposing a low-E glass plate 102, with the film coated face facing upward, and coating a glass powder slurry (Zhuhai Caizhu Industrial Co., Ltd., 711 type glass powder, with a sealing temperature of 400° C) on the periphery region of the face and on the regions near the through holes 7, and then the glass powder slurry was heated to dry and to form a fixed shape .
3. Disposing the supports and the getters on the film coated face of the low-E glass plate 102, the parameters of this step being the same as those of steps 3 and 4 of Example 1.
4. Stacking: stacking the low-E glass plate 101 on the low-E glass plate 102, so that a plate-like cavity is enclosed by the low-E glass plates 101, 102 and the sealing glass together, wherein the film coated face of the low-E glass plate 101 faces the plate-like cavity.
5. heating and packaging in vacuum: disposing the stacked glass plates in a vacuum furnace, and performing the following operations:
   (1) evacuating a vacuum furnace, so that the degree of vacuum (absolute pressure value) in the furnace is less than or equal to 1×10⁻⁴Pa;
   (2) keeping the degree of vacuum (absolute pressure value) in the furnace less than or equal to 1×10⁻⁴Pa, and heating the vacuum furnace, with a temperature increasing speed of about 1-5°C/min, when the temperature reaches about 400°C, observing if there are bubbles forming in the sealing glass, and reducing the temperature increasing speed or stopping the temperature increase in an initial bubble-forming stage to prevent excessive bubbling, and preserving heat for 5-10min, getters are activated in step 2); and
   (3) reducing the degree of vacuum and the temperature in the furnace, reducing the pressure in the furnace to atmospheric pressure within 5-10min, reducing the temperature in the furnace to 50°C or less in 10-12h, and then opening the furnace to obtain the product.

### Example 4 (curved-surface vacuum glass)

Fig.10 is a perspective view of the vacuum glass of Example 4, and Fig.11 is an A-A sectional view of the vacuum glass of Fig.10. Referring to the figures:
The vacuum glass product of Example 4 comprises glass bodies 1, which are two low-E curved glass plates 101 and 102, with a bow curvature of 100mm/1m, arranged parallel to each other; a cavity 5 enclosed by two low-E curved glass plates and a sealant 4 (a sealing glass) together; as well as supports and getters which were disposed in the cavity 5. The cavity 5 is hermetic, and the bow curvature of the vacuum glass is 100mm/1m; and the getters 3 were non-evaporable getters, and the vacuum glass does not comprise an enclosure for enclosing the getter 3, and the enclosure is made of a hermetic material. The vacuum glass does not have blocked evacuation port.

The preparation steps are as follows:
1. providing the glass plates: providing two tempered low-E (low-emissivity glass) curved glass plates 101 and 102 with sizes of 1m×1m×5mm, having a bow curvature along a direction of 100mm/1m;
   10mm of film near the periphery region of the glass is ground off with reference to the method of Example 1,
2. with reference to the method of Example 1,disposing the sealants, disposing the supports (fixing the supports on the glass plates by using high temperature resistant UV inorganic glue), disposing the getters (4 sheets of strip shaped getter same as those in Example 2) and stacking the glass plates.
3. The parameters of the step of vacuum heating and packaging are the same as those of Example 2, and the curved-surface vacuum glass of Example 4 is obtained.

### Example 5 (vacuum glass tube)

Fig.12 is a perspective view of the vacuum glass of Example 5, and Fig.13 is an A-A sectional view of the vacuum glass of Fig.12. Referring to the figures:
The vacuum glass product of Example 5 comprises glass bodes 1, which are two sleeved glass tubes 104 and 105, with the glass tube 105 encasing the glass tube 104; and a cavity 5 enclosed by the glass tubes 104, 105 and a sealant 4 (a sealing glass). The cavity 5 is hermetic; the getter 3 is a non-evaporable getter, the vacuum glass does not comprise an enclosure for enclosing the getter 3, the enclosure is made of a hermetic material. The vacuum glass does not have a blocked evacuation port.
1. Preparing the glass body (glass tube): preparing two glass tubes 104 and 105, with sizes as follows: the glass tube 104 having an outer diameter of 48mm, an inner diameter of 44mm, a thickness of 2mm, a length of 1790mm, the glass tube 105 having an outer diameter of 58mm, an inner diameter of 54mm, a thickness of 2mm, and a length of 1800mm. Both of the glass tubes 104 and 105 have one open end.
2. Disposing the sealant: encasing the glass tube 104 with the glass tube 105 from outside thereof, with the glass tube 104 disposed in center, and disposing a sheet of annular zirconium-vanadium-iron getter (Zr-V-Fe getter, Nanjing Shangong Electronic Materials Co., Ltd.) in the gap between the upper ends of the glass tubes 104 and 105.
3. Disposing the sealant: the sealant 4 is the sealing glass. 728H glass powder from Beijing Beixu Electronic Materials Co., Ltd was used, and the sealing temperature was about 400 °C. The glass powder was made into ring-like sealing glass with a mold, with sizes as follows: an inner diameter of 44mm, an outer diameter of 58mm, and a thickness of 5mm. The glass tubes 104 and 105 are disposed vertically, their positions being fixed by a supporting frame, the openings of the glass tubes 104 and 105 were both in contact with the ring-like sealing glass, and thus a cavity was enclosed by the glass tubes 104, 105 and the sealing glass together.
4. Heating and packaging in vacuum, fixing the glass tubes 104 and 105 by a mold, then putting them in a vacuum furnace, and the following operations were performed:
   (1) evacuating a vacuum furnace, so that the degree of vacuum (absolute pressure value) in the furnace is less than or equal to 1×10⁻⁴Pa;
   (2) keeping the degree of vacuum (absolute pressure value) in the furnace less than or equal to 1×10⁻⁴Pa, and heating the vacuum furnace, with a temperature increasing speed of about 1-5°C/min, when the temperature reached about 400°C, observing if there are bubbles appearing from the sealing glass, reducing the temperature increasing speed or stopping the temperature increase in an initial bubble-forming stage to prevent excessive bubbling, and preserving heat for 5-10min; and
   (3) reducing the degree of vacuum in the furnace, meanwhile, reducing the temperature in the furnace, with the pressure in the furnace being reduced to atmospheric pressure within 5-10min, and the temperature in the furnace being reduced to 50°C or less in 10-12h, and then opening the furnace to obtain the product.

### Example 6

The method of Example 1 is followed, but the supports used is different from that of Example 2.

The supports used in Example 6 are elastic gaskets: an elastic gasket is formed by bending a 304L stainless steel wire having a diameter of 0.35 mm, and the sizes of the elastic gaskets are as follows: the inner diameter is 0.35mm, the outer diameter is 1.05mm, the height is 0.70mm, and the placement interval of the supports is 40mm × 40mm.

### Comparative Example 1

The method of Example 1 is followed, but no getter is disposed in the cavity of the vacuum glass, and the vacuum glass of Comparative Example 1 is prepared.

### Comparative Example 2

With reference to Example 1, the differences lie in the step of disposing the getters:
4. Disposing the getters: respectively drilling a bind hole with a diameter of 12mm and a depth of 3mm on one corner of the glass plate, and disposing a sheet of zirconium-vanadium-iron getter with a size of ϕ12mm×3mm (with a volume of about 0.34cm³, and a mass of about 3g) in the blind hole, which is equivalent to disposing about 0.0091g getter in per cm³ of the cavity.

### Analysis and test

The following indexes of the vacuum glass in the above Examples are detected with reference to "vacuum glass" (JC/T1079-2008), and the results are as follows:
1. Thickness deviation:
   The thickness deviations of the vacuum glass products of Examples 1-5 were ± less than 0.4mm.
2. Size deviation:
   The size deviations of the vacuum glass products of Examples 1-5 were ± less than 3.0mm.
3. Diagonal difference:
   The Diagonal difference of the vacuum glass products of Examples 1-3 were less than 2% of the average diagonal length thereof.
4. processing quality of periphery:
   The vacuum glass products of Examples 1 to 5 did not have defects such as cracks at periphery portions.
5. Sealing cap:
   The vacuum glass of products of Examples 1-5 did not have blocked evacuation port or sealing cap.
6. Supports:
   With respect to the vacuum glass of Example 1, the supports are arranged in an array of 30mm × 30mm, without overlapping, without missing, and are arranged neatly.

With respect to the vacuum glass of Examples 2-4, and 6, the supports are arranged in an array of 40mm × 40mm, without overlapping, without missing, and are arranged neatly.

The vacuum glass of Example 5 does not have a support.

7. Quality of appearance:
There were no scratch, blasting, internal stain or crack on the appearances of the vacuum glass of Example 1~5.

8. Quality of edge seal:
The vacuum glass products of Examples 1-5 have full and flat weld joints, with an effective width of the edge seal greater than 5 mm.

9. Curvature:
The vacuum glass products of Examples 1-3 have curvatures of less than 0.3% of the thickness thereof. The vacuum glass products of Examples 4 and 5 have curvatures which fulfill the size requirements.

10. Proportions of transparent regions, referring to Table 1.

**Table 1**

| Serial number | Example 1 | Example 2 | Example 3 | Example 4 | Example 5 |
|---|---|---|---|---|---|
| Proportions of transparent regions | >92% | >92% | >92% | >92% | >98.8% |

The proportion of transparent regions equals to areas of the transparent regions/overall area×100%

With respect to Examples 1-4, the transparency measurement was performed in a direction vertical to the thickness direction of the vacuum glass, and the transparency measurement in Example 5 is performed in a direction vertical to the wall of the glass tube.

11. Getter contents, referring to Table 2:

**Table 2**

| Serial number | Example 1 | Example 2 | Example 3 | Example 4 | Comparative Example 1 |
|---|---|---|---|---|---|
| Getter content g/cm³ | 1.8 | 1.7 | 1.8 | 1.8 | No |

12. Thermal insulation performance test, referring to Table 3:

**Table 3**

| Serial number | Example 1 | Example 2 | Example 3 | Comparative Example 1 |
|---|---|---|---|---|
| K value W/(m²•K) | 0.8 | 0.5 | 0.8 | 4.8 |

12b. Besides, dew formation resistance ability tests were performed on the vacuum glass products of Example 1 and Comparative Example 2. In particular, the vacuum glass products of Example 1 and Comparative Example 2 were made into two glass doors of a refrigerator, with the temperature in the refrigerator being set at -25 ° C, with the temperature outside of the refrigerator being 25 ° C. When the temperature in the refrigerator reaches -2 ° C, dew appeared on the vacuum glass of Comparative Example 2, while no dew appeared on the vacuum glass of Example 1. As the temperature of the refrigerator continued to decrease, the temperature in the refrigerator reached -25 ° C and kept for 48h, and still, no dew appeared on the vacuum glass of Example 1.

12c. To compare the dew formation resistance ability of the vacuum glass products with different amounts of built-in getters, the getter content of the vacuum glass made as taught by Example 1 was adjusted. Specifically, the length of the getter used in Example 1 was adjusted; four sheets of vacuum glass.in which getters with total lengths of 485mm, 970mm, 2910mm and 3880mm were respectively added to prepare four sheets of vacuum glass. The four sheets of vacuum glass are made into four glass doors of the same refrigerator, the temperature in the refrigerator is set as -22 ° C, and the temperature at the outside of the refrigerator is 25 ° C. When the temperature in the refrigerator reaches -12 ° C, dew started to appear on the vacuum glass with the 485mm getter strip therein. With the temperature in the refrigerator continuously decreasing, when the temperature in the refrigerator reaches -22 ° C, no dew appeared on the vacuum glass with the 970mm, 2910mm and 3880mm getter strips, with the surfaces of the vacuum glass facing outward were respectively 23.4°C, 24°C and 24°C.

13. Sound insulation performance, referring to Table 4:

**Table 4**

| Serial number | Example 1 | Example 2 | Example 3 |
|---|---|---|---|
| R_{w}+Cₜᵣ (dB) | 31 | 32 | 31 |

The sound insulation performance of the vacuum glass products of Examples 1-3 are greater than 30dB.

14. Irradiation resistance: referring to Table 5.

**Table 5**

| Serial number | | Example 1 | Example 2 | Example 3 |
|---|---|---|---|---|
| value K W/(M²•K) | Before the test | 0.8 | 0.5 | 0.8 |
| | After the test | 0.82 | 0.51 | 0.82 |

After UV irradiation for 200h, the variations of the value K of the vacuum glass products before and after the test is no more than 3%.

15. Climate cycle durability, referring to Table 6:

**Table 6**

| Serial number | | Example 1 | Example 2 | Example 3 |
|---|---|---|---|---|
| value K W/(M²•K) | Before the test | 0.8 | 0.5 | 0.8 |
| | After the test | 0.82 | 0.51 | 0.82 |

After the climate durability test, the vacuum glass products of Examples 1-3 do not burst, and the change rates of the value K before and after the test are no more than 3%.

16. High temperature and high humidity durability, referring to Table 7:

**Table 7**

| Serial number | | Example 1 | Example 2 | Example 3 |
|---|---|---|---|---|
| value K W/(M²•K) | Before the test | 0.8 | 0.5 | 0.8 |
| | After the test | 0.82 | 0.51 | 0.82 |

After the high temperature and high humidity durability test, the vacuum glass products do not crack, and the variations of the value K before and after the test are no more than 3%.

It is known by the inventor that the thermal insulation performance or the sound insulation performance directly reflects the degree of vacuum of the vacuum glass. According to the national standard "vacuum glass" (JC/T1079-2008), the thermal insulation performance or the sound insulation performance is a key indicator reflecting the quality of the vacuum glass. As shown by the thermal insulation performance test (Table 3, dew formation resistance test) or the sound insulation performance test (Table 4), the vacuum glass products of Examples 1-5 have better thermal insulation performance and sound insulation performance, which indicates that the vacuum glass products of Examples 1-5 have cavities 5 with a higher degree of vacuum than Comparative Example 1 and Comparative Example 2.

Referring to the irradiation resistance test (Table 5), the climate cycle durability test (Table 6) and the high temperature and high humidity durability test (Table 7), the vacuum glass products of Examples 1-5 have better irradiation resistance and durability.

One of the advantageous effects of the foregoing disclosed embodiments is that the vacuum glass dose not comprise an enclosure for enclosing the getter, which greatly simplified the structure of the getter and reduces the cost of the getter, which further simplified the structure of the vacuum glass, and reduced the cost of the vacuum glass.

A further advantageous effect of the foregoing disclosed embodiments is that the thickness of the getter is very small, so that the thickness of the cavity could be very small, no groove/opening for holding the getter is needed to be reserved on the glass body, so that the integrity of the glass body is maintained.

A still further advantageous effect of the foregoing disclosed embodiments is that the vacuum glass does not have an evacuation port. The vacuum glass without an evacuation port has a pretty appearance, a complete surface and a better condition for further processing. The vacuum glass of the above examples could be further processed into special glass such as laminated glass or film-coated glass to meet the needs of different uses.

It is known by the inventor that getters in the air are passivated, and activation of the getters refers to make the getter to exhibit gettering characteristics by a vacuum thermal treatment method. In the foregoing disclosed embodiments, an important function of the vacuum heating is to activate the getter.

It is known by the inventor that, after the vacuum glass is sealed and discharged from the furnace, the degree of vacuum of the vacuum glass would be damaged by large-area and/or long-time heating of the vacuum glass, and the vacuum glass may even crack due to excessive internal stress within itself due to uneven heating. With respect to the vacuum glass in the foregoing disclosed embodiments, the getter 3 is activated in the step of heating in vacuum, so the process of evapotranspiration, activation or deblocking of the getter could be avoided, in particular the process of evapotranspiration, activation or deblocking of the getter by using high-frequency heating, infrared heating, and other manners could be avoided, thereby simplifying the process steps and reducing the cost. Furthermore, vacuum glass having a higher degree of vacuum, particularly vacuum glass having better thermal insulation performance and/or sound insulation performance can be obtained in the foregoing embodiments.

It is known by the inventor that the glass body and/or the sealant (for example, the sealing glass) may release gas when being heated. In Examples 1-5, one function of the getter 3 is to absorb the gas that may enter the cavity (5) during the preparation of the vacuum glass, especially, during a process of heating and packaging of the vacuum glass in vacuum, to keep the degree of vacuum in the cavity (5) being up to standard, thereby improving the thermal insulation performance and/or the sound insulation performance of the vacuum glass.

It is found by the inventor that, during preparation of a vacuum glass, especially during the process of heating and packaging of a vacuum glass in vacuum, if more than 0.1g, for example, more than 0.5g, for another example, more than 1g of getter is added in per cm³ of the cavity volume, the gas that may enter the cavity (5) can be effectively absorbed and the degree of vacuum in the cavity (5) can be kept up to standard, thereby resulting in good thermal insulation performance and/or sound insulation performance of the vacuum glass.

It is known by the inventor that the glass body and/or the sealant (for example, the sealing glass) may release a certain amount of gas during a long period of usage time (for example, from 1 to 50 years). Another function of the getter 3 is that to continuously absorb the gas that may enter the cavity (5) during use of the vacuum glass, so as to ensure the degree of vacuum in the cavity (5) up to standard, and to further improve the durability of the vacuum glass.

According to the vacuum glass in the foregoing disclosed embodiments, the getter is not disposed in the vacuum glass through the evacuation port, and the size of the getter is not limited by the evacuation port. A desired amount of getter can be disposed according to the size of the cavity of the vacuum glass, for example, 1g/cm³ or more of getter is disposed therein.

The getter in the vacuum glass in the foregoing disclosed embodiments is the non-evaporable getter. The non-evaporable getter can be used without a requirement of high-frequency heating to evaporate itself, so no metal film is formed on the surface of the glass body, so the influence on the transparency of the vacuum glass is very little. The proportion of transparent regions of the vacuum glass obtained is relatively high.

Due to manufacturing accuracy issues, the thicknesses of the glass plates for preparing the vacuum glass may not be completely uniform, there may be some undulations, in addition, the heights of the supports may not be completely uniform, and there may be some undulations. If the supports are rigid, after the vacuum glass is assembled, some of the supports may not be able to support the glass on two sides due to insufficient heights, so these supports cannot be fixed to its position due to loss of the extrusion force from the glass at its two sides, so displacement may happen, resulting in uneven stress in the vacuum glass, which further affects the aesthetics and the safety of the vacuum glass.

The above problem can be solved by using the elastic supports according to the present invention, and the elastic support can adapt to the space heights of different sizes by elastically deformation so that each support supports the vacuum glass well. In addition, the support made of a metal material (for example, copper, aluminum, steel or chromium) has good thermal resistance and does not lose elasticity due to heating during the preparation of the vacuum glass.

## Claims

1. A method for preparing a vacuum glass, comprising the following steps:
i) enclosing a cavity with a glass body and a sealant, and disposing a getter in said cavity;
ii) heating the product of step i) in a vacuum environment, whereby creating a vacuum in said cavity, welding said sealant and said glass body together, and activating said getter;
iii) cooling the product of step ii), and then obtaining a vacuum glass;
wherein, in step ii), temperature increasing speed is reduced or temperature increase is stopped once bubbles start to form in the sealant.

2. The method according to claim 1, wherein step iii) comprises reducing the degree of vacuum and the temperature in the furnace by reducing the pressure in the furnace to atmospheric pressure when the sealant is still in a semi-solid state, subsequently lowering the temperature in the furnace to a solidification temperature of the sealant, and then opening the furnace to obtain the product.

3. The method according to claim 1, wherein step iii) comprises reducing the degree of vacuum and the temperature in the furnace by reducing the pressure in the furnace to the atmospheric pressure within 5 to 10 minutes, lowering the temperature of the furnace to 50 °C or less within 10 to 12 hours, and opening the furnace to obtain the product.

4. The method according to claim 1, wherein step ii) comprises reducing temperature increasing speed or stopping temperature increase in an initial bubble-forming stage.

5. The method according to claim 1, **characterized in** one or more of the following:
wherein, in step i), said getter is passivated getter;
wherein, in step i), said surface of said getter does not comprise an enclosure, and said enclosure is made of a hermetic material;
wherein, step i) further comprises disposing a support for supporting said glass body in said cavity;
wherein, step i) further comprises shaping a sealant into a desired shape in a mold;
wherein, in step i), the sealant is sealing glass;
wherein, in step ii), the heating is performed at a temperature of 300-600 °C;
wherein, in step ii), the heating is performed at a temperature of 400-500 °C;
wherein, in step ii), the heating is performed at a temperature greater than or equal to the sealing temperature of the sealant;
wherein, in step ii), the heating is performed at a temperature greater than or equal to the activation temperature of the getter;
wherein, in step ii), the heating is performed for a period longer than or equal to the activation time of the getter;
wherein, in step ii), the vacuum environment has an absolute pressure value less than or equal to 1×10⁻¹Pa;
wherein, in step ii), the vacuum environment has an absolute pressure value less than or equal to 1×10⁻²Pa;
wherein, in step ii), the vacuum environment has an absolute pressure value less than or equal to 1×10⁻³Pa;
wherein, in step ii), the vacuum environment has an absolute pressure value less than or equal to 1×10⁻⁴Pa;
wherein, in step ii), heating is stopped at an initial bubble-forming stage of the sealant.

6. The method according to claim 1, wherein the vacuum glass comprising:
a glass body (1), a cavity (5) enclosed by said glass body (1) and a sealant (4) together, and a getter (3) disposed in said cavity (5);
said cavity (5) is hermetic therein;
the getter (3) is a non-evaporable getter, and said vacuum glass does not comprise an enclosure for enclosing the getter (3), and said enclosure is made of a hermetic material;
in a direction passing through said cavity (5), said vacuum glass has a thermal conductivity value K less than or equal to 4 W/(m²·K).

7. The method according to claim 6, **characterized in** one or more of the following,
wherein, said vacuum glass does not comprise a sealed evacuation port;
wherein, said glass body (1) does not have a sealed evacuation port thereon;
wherein, said sealant (4) does not have a sealed evacuation port thereon;
wherein, said vacuum glass does not have a sealing device for sealing the evacuation port;
wherein, said vacuum glass comprises at least two glass bodies (1);
wherein, said vacuum glass comprises at least three glass bodies (1); and
wherein, adjacent glass bodies (1) are bonded by the sealant (4).

8. The method according to claim 6, wherein said glass body (1) comprises a plate-like glass body;
wherein, said glass body (1) comprises at least two plate-like glass bodies;
wherein, said plate-like glass bodies face each other;
wherein, said plate-like glass bodies are parallel to each other.

9. The method according to claim 6, **characterized in** one or more of the following,
wherein, said glass body (1) comprises a glass tube;
wherein, said glass body (1) comprises a glass plate;
wherein, said glass plate is a planar glass plate or a curved glass plate.

10. The method according to claim 6, **characterized in** one or more of the following,
wherein, a plated film or a pasted file is provided on at least one glass body (1);
wherein, said glass body (1) has a flat surface;
wherein, said glass body (1) does not have a groove thereon;
wherein, said glass body (1) is formed of silicate glass;
wherein, said glass body (1) has a softening point higher than 550 °C;
wherein, said glass body (1) has a softening point higher than 650 °C;
wherein, said glass body (1) has a softening point higher than 750 °C;
wherein, said cavity (5) is a plate-like cavity;
wherein, said vacuum glass comprises at least one cavity (5);
wherein, said vacuum glass comprises at least two cavities (5); and
wherein, the sealant (4) and the glass body (1) are welded together.

11. The method according to claim 6, wherein said sealant (4) comprises sealing glass; **characterized in** one or more of the following,
wherein, the sealing glass comprises a glass selected from PbO-ZnO-B₂O₃ system, Bi₂O₃-B₂O₃-SiO₂ system, Bi₂O₃-B₂O₃-ZnO system, Na₂O-Al₂O₃-B₂O₃ system, SnO-ZnO-P₂O₅ system, V₂O₅-P₂O₅-Sb₂O₃ system, ZnO-B₂O₃-SiO₂ system and ZnO-B₂O₃-BaO system;
wherein, the sealing glass has a sealing temperature less than 500 °C;
wherein, the sealing glass has a sealing temperature of 300-450 °C; and
wherein, the sealing glass has a sealing temperature of 400-450 °C.

12. The method according to claim 6, **characterized in** one or more of the following,
wherein, said getter (3) is an activated getter;
wherein, said getter (3) is capable of absorbing one or more gases selected from O₂, N₂, CO₂, CO and H_{2;}
wherein, said getter (3) comprises an elementary substance with gettering ability, an alloy with gettering ability, a compound with gettering ability or a mixture with gettering ability;
wherein, said getter (3) contains zirconium element or titanium element;
wherein, said getter (3) contains one or more transition metal elements;
wherein, said getter (3) contains one or more rare earth metal elements;
wherein, said getter (3) is a Zr-A1 type getter or a Zr-V-Fe type getter;
wherein, said getter (3) is in said cavity (5) in a density of 0.1g/cm³ or more;
wherein, said getter (3) is in said cavity (5) in a density of 0.5g/cm³ or more;
wherein, said getter (3) is in said cavity (5) in a density of 1g/cm³ or more;
wherein, said getter (3) has an activation temperature less than or equal to the sealing temperature of the sealant (4);
wherein, said getter (3) is capable of being activated at 300-450 °C;
wherein, said getter (3) is capable of being activated by vacuum thermal treatment at 300 °C or more for 1 hour or more, or
said getter (3) is capable of being activated by heat treatment in vacuum at 350 °C or more for more than 0.5 hours, or
said getter (3) is capable of being activated by heat treatment in vacuum at 400 °C or more for 10 minutes or more.

13. The method according to claim 6, wherein said vacuum glass further comprises a support (2) for supporting said glass body (1) so as to maintain the shape of the cavity (5); **characterized in** one or more of the following,
wherein, said support (2) is disposed in said cavity (5);
wherein, said support (2) is made of a metallic material or a non-metallic material;
wherein, said support (2) is made of a transparent inorganic substance;
wherein, said support (2) is made of glass (for example, quartz glass or sapphire glass);
wherein, said support (2) is a glass sheet; and
wherein, said support (2) is a circular glass sheet, an elliptical glass sheet or a polygonal glass sheet;
wherein, said getter is disposed at a position close to an inner side of said sealant;
wherein said support is an elastic gasket;
wherein said elastic gasket is made of a metallic material.

## Patentansprüche

1. Verfahren zur Herstellung eines Vakuumglases, umfassend die folgenden Schritte:
i) Einschließen eines Hohlraums mit einem Glaskörper und einem Dichtungsmaterial und Anordnen eines Getters in diesem Hohlraum;
ii) Erhitzen des Produkts aus Schritt i) in einer Vakuumumgebung, wodurch ein Vakuum in dem Hohlraum erzeugt wird, das Dichtungsmaterial und der Glaskörper miteinander verschweißt werden und der Getter aktiviert wird;
iii) Abkühlen des Produkts aus Schritt ii) und anschließendes Gewinnen eines Vakuumglases;
wobei in Schritt ii) die Geschwindigkeit der Temperaturerhöhung verringert oder die Temperaturerhöhung gestoppt wird, sobald sich Blasen in dem Dichtungsmaterial zu bilden beginnen.

2. Verfahren nach Anspruch 1, wobei Schritt iii) das Verringern des Vakuumgrades und der Temperatur im Ofen durch Verringern des Drucks im Ofen auf Atmosphärendruck, wenn sich das Dichtungsmaterial noch in einem halbfesten Zustand befindet, anschließendes Absenken der Temperatur im Ofen auf eine Erstarrungstemperatur des Dichtungsmaterials und dann Öffnen des Ofens zur Gewinnung des Produkts umfasst.

3. Verfahren nach Anspruch 1, wobei Schritt iii) das Verringern des Vakuumgrades und der Temperatur im Ofen durch Verringern des Drucks im Ofen auf Atmosphärendruck innerhalb von 5 bis 10 Minuten, Absenken der Temperatur des Ofens auf 50°C oder weniger innerhalb von 10 bis 12 Stunden und das Öffnen des Ofens zur Gewinnung des Produkts umfasst.

4. Verfahren nach Anspruch 1, wobei Schritt ii) das Verringern der Geschwindigkeit der Temperaturerhöhung oder das Stoppen der Temperaturerhöhung in einer anfänglichen Blasenbildungsphase umfasst.

5. Verfahren nach Anspruch 1, **gekennzeichnet durch** eines oder mehrere der folgenden Merkmale:
wobei in Schritt i) der Getter ein passivierter Getter ist;
wobei in Schritt i) die Oberfläche des Getters keine Umhüllung aufweist und die Umhüllung aus einem hermetischen Material hergestellt ist;
wobei Schritt i) ferner das Anordnen eines Trägers zum Stützen des Glaskörpers in dem Hohlraum umfasst;
wobei Schritt i) ferner das Formen eines Dichtungsmaterials in eine gewünschte Form in einer Form umfasst;
wobei in Schritt i) das Dichtungsmaterial ein Dichtungsglas ist;
wobei in Schritt ii) das Erhitzen bei einer Temperatur von 300-600°C durchgeführt wird;
wobei in Schritt ii) das Erhitzen bei einer Temperatur von 400-500°C durchgeführt wird;
wobei in Schritt ii) das Erhitzen bei einer Temperatur durchgeführt wird, die größer oder gleich der Versiegelungstemperatur des Dichtungsmaterials ist;
wobei in Schritt ii) das Erhitzen bei einer Temperatur durchgeführt wird, die größer als oder gleich der Aktivierungstemperatur des Getters ist;
wobei in Schritt ii) das Erhitzen für einen Zeitraum durchgeführt wird, der länger als oder gleich der Aktivierungszeit des Getters ist;
wobei in Schritt ii) die Vakuumumgebung einen absoluten Druckwert von weniger als oder gleich 1 × 10⁻¹ Pa aufweist;
wobei in Schritt ii) die Vakuumumgebung einen absoluten Druckwert von weniger als oder gleich 1 × 10⁻² Pa aufweist;
wobei in Schritt ii) die Vakuumumgebung einen absoluten Druckwert von weniger als oder gleich 1 × 10⁻³ Pa aufweist;
wobei in Schritt ii) die Vakuumumgebung einen absoluten Druckwert von weniger als oder gleich 1 × 10⁻⁴ Pa aufweist;
wobei in Schritt ii) das Erhitzen in einem Anfangsstadium der Blasenbildung des Dichtungsmaterials gestoppt wird.

6. Verfahren nach Anspruch 1, wobei das Vakuumglas umfasst:
einen Glaskörper (1), einen Hohlraum (5), der von dem Glaskörper (1) und einem Dichtungsmaterial (4) zusammen umschlossen ist, und einen Getter (3), der in dem Hohlraum (5) angeordnet ist; wobei
der Hohlraum (5) darin hermetisch abgeschlossen ist;
der Getter (3) ein nicht verdampfbarer Getter ist und das Vakuumglas keine Umhüllung zum Umschließen des Getters (3) aufweist und die Umhüllung aus einem hermetischen Material hergestellt ist;
das Vakuumglas in einer durch den Hohlraum (5) verlaufenden Richtung einen Wärmeleitfähigkeitswert K kleiner oder gleich 4 W/(m² · K) aufweist.

7. Verfahren nach Anspruch 6, **gekennzeichnet durch** eines oder mehrere der folgenden Merkmale:
wobei das Vakuumglas keine abgedichtete Evakuierungsöffnung aufweist;
wobei der Glaskörper (1) keine abgedichtete Evakuierungsöffnung darauf aufweist;
wobei das Dichtungsmaterial (4) keine abgedichtete Evakuierungsöffnung darauf aufweist;
wobei das Vakuumglas keine Dichtungsvorrichtung zum Abdichten der Evakuierungsöffnung aufweist;
wobei das Vakuumglas mindestens zwei Glaskörper (1) umfasst;
wobei das Vakuumglas mindestens drei Glaskörper (1) umfasst; und
wobei benachbarte Glaskörper (1) durch das Dichtungsmaterial (4) miteinander verbunden sind.

8. Verfahren nach Anspruch 6, wobei der Glaskörper (1) einen plattenartigen Glaskörper umfasst;
wobei der Glaskörper (1) mindestens zwei plattenartige Glaskörper umfasst;
wobei die plattenartigen Glaskörper einander gegenüberliegen;
wobei die plattenartigen Glaskörper parallel zueinander sind.

9. Verfahren nach Anspruch 6, **gekennzeichnet durch** eines oder mehrere der folgenden Merkmale:
wobei der Glaskörper (1) eine Glasröhre umfasst;
wobei der Glaskörper (1) eine Glasplatte umfasst;
wobei die Glasplatte eine ebene Glasplatte oder eine gebogene Glasplatte ist.

10. Verfahren nach Anspruch 6, **gekennzeichnet durch** eines oder mehrere der folgenden Merkmale:
wobei auf mindestens einem Glaskörper (1) eine plattierte Folie oder eine aufgeklebte Datei vorgesehen ist;
wobei der Glaskörper (1) eine ebene Oberfläche aufweist;
wobei der Glaskörper (1) keine Rille darauf aufweist;
wobei der Glaskörper (1) aus Silikatglas gebildet ist;
wobei der Glaskörper (1) einen Erweichungspunkt von mehr als 550°C aufweist;
wobei der Glaskörper (1) einen Erweichungspunkt von mehr als 650°C aufweist;
wobei der Glaskörper (1) einen Erweichungspunkt von mehr als 750°C aufweist;
wobei der Hohlraum (5) ein plattenartiger Hohlraum ist;
wobei das Vakuumglas mindestens einen Hohlraum (5) aufweist;
wobei das Vakuumglas mindestens zwei Hohlräume (5) umfasst; und
wobei das Dichtungsmaterial (4) und der Glaskörper (1) miteinander verschweißt sind.

11. Verfahren nach Anspruch 6, wobei das Dichtungsmaterial (4) Dichtungsglas umfasst, **gekennzeichnet durch** eines oder mehrere der folgenden Merkmale:
wobei das Dichtungsglas ein Glas umfasst, das aus dem PbO-ZnO-B₂O₃-System,
dem Bi₂O₃-B₂O₃-SiO₂-System, dem Bi₂O₃-B₂O₃-ZnO-System, dem Na₂O-Al₂O₃-B₂O₃-System, dem SnO-ZnO-P₂O₅-System, dem V₂O₅-P₂O₅-Sb₂O₃-System, dem ZnO-B₂O₃-SiO₂-System und dem Zn0-B₂O₃-BaO-System ausgewählt ist;
wobei das Dichtungsglas eine Versiegelungstemperatur von weniger als 500°C aufweist;
wobei das Dichtungsglas eine Versiegelungstemperatur von 300-450°C aufweist; und
wobei das Dichtungsglas eine Versiegelungstemperatur von 400-450°C aufweist.

12. Verfahren nach Anspruch 6, **gekennzeichnet durch** eines oder mehrere der folgenden Merkmale:
wobei der Getter (3) ein aktivierter Getter ist;
wobei der Getter (3) in der Lage ist, ein oder mehrere Gase, ausgewählt aus O₂, N₂, CO₂, CO und H₂, zu absorbieren;
wobei der Getter (3) eine elementare Substanz mit Getter-Fähigkeit, eine Legierung mit Getter-Fähigkeit, eine Verbindung mit Getter-Fähigkeit oder eine Mischung mit Getter-Fähigkeit umfasst;
wobei der Getter (3) ein Zirkoniumelement oder ein Titanelement enthält;
wobei der Getter (3) ein oder mehrere Übergangsmetallelemente enthält;
wobei der Getter (3) ein oder mehrere Seltenerdmetallelemente enthält;
wobei der Getter (3) ein Getter vom Zr-Al-Typ oder ein Getter vom Zr-V-Fe-Typ ist;
wobei sich der Getter (3) in dem Hohlraum (5) in einer Dichte von 0,1 g/cm³ oder
mehr befindet;
wobei sich der Getter (3) in dem Hohlraum (5) in einer Dichte von 0,5 g/cm³ oder
mehr befindet;
wobei sich der Getter (3) in dem Hohlraum (5) in einer Dichte von 1 g/cm³ oder mehr befindet;
wobei der Getter (3) eine Aktivierungstemperatur aufweist, die kleiner oder gleich der Versiegelungstemperatur des Dichtungsmaterials (4) ist;
wobei der Getter (3) bei 300-450°C aktiviert werden kann;
wobei der Getter (3) durch thermische Vakuumbehandlung bei 300°C oder mehr für 1 Stunde oder mehr aktiviert werden kann, oder
der Getter (3) durch eine Wärmebehandlung im Vakuum bei 350°C oder mehr für mehr als 0,5 Stunden aktiviert werden kann, oder
der Getter (3) durch eine Wärmebehandlung im Vakuum bei 400°C oder mehr für 10 Minuten oder länger aktiviert werden kann.

13. Verfahren nach Anspruch 6, wobei das Vakuumglas ferner einen Träger (2) zum Stützen des Glaskörpers (1) umfasst, um die Form des Hohlraums (5) beizubehalten; **gekennzeichnet durch** eines oder mehrere der folgenden Merkmale:
wobei der Träger (2) in dem Hohlraum (5) angeordnet ist;
wobei der Träger (2) aus einem metallischen Material oder einem nichtmetallischen Material hergestellt ist;
wobei der Träger (2) aus einer transparenten anorganischen Substanz hergestellt ist;
wobei der Träger (2) aus Glas (z.B. Quarzglas oder Saphirglas) hergestellt ist;
wobei der Träger (2) eine Glasplatte ist; und
wobei der Träger (2) eine kreisförmige Glasplatte, eine elliptische Glasplatte oder eine polygonale Glasplatte ist;
wobei der Getter an einer Position nahe einer Innenseite des Dichtungsmaterials angeordnet ist;
wobei der Träger eine elastische Dichtung ist:
wobei die elastische Dichtung aus einem metallischen Material hergestellt ist.

## Revendications

1. Procédé de préparation d'un verre sous vide, comprenant les étapes suivantes :
i) l'enveloppement d'une cavité avec un corps de verre et un matériau d'étanchéité, et la disposition d'un getter dans ladite cavité ;
ii) le chauffage du produit de l'étape i) dans un environnement sous vide, moyennant quoi la création d'un vide dans ladite cavité, le soudage conjoint dudit matériau d'étanchéité et dudit corps de verre, et l'activation dudit getter ;
iii) le refroidissement du produit de l'étape ii), puis l'obtention d'un verre sous vide ;
dans lequel, à l'étape ii), la vitesse d'augmentation de la température est réduite ou l'augmentation de la température est arrêtée une fois que des bulles commencent à se former dans le matériau d'étanchéité.

2. Procédé selon la revendication 1, dans lequel l'étape iii) comprend la réduction du degré de vide et de la température dans le four en réduisant la pression dans le four à la pression atmosphérique lorsque le matériau d'étanchéité est encore dans un état semi-solide, en abaissant ensuite la température dans le four à une température de solidification du matériau d'étanchéité, puis en ouvrant le four pour obtenir le produit.

3. Procédé selon la revendication 1, dans lequel l'étape iii) comprend la réduction du degré de vide et de la température dans le four en réduisant la pression dans le four à la pression atmosphérique en 5 à 10 minutes, en abaissant la température du four à 50 °C ou moins en 10 à 12 heures, et en ouvrant le four pour obtenir le produit.

4. Procédé selon la revendication 1, dans lequel l'étape ii) comprend la réduction de la vitesse d'augmentation de la température ou l'arrêt de l'augmentation de la température à un stade initial de formation de bulles.

5. Procédé selon la revendication 1, **caractérisé par** un ou plusieurs des points suivants :
dans lequel, à l'étape i), ledit getter est un getter passivé ;
dans lequel, à l'étape i), ladite surface dudit getter ne comprend pas d'enveloppe, et ladite enveloppe est faite d'un matériau hermétique ;
dans lequel, l'étape i) comprend en outre la disposition d'un support pour supporter ledit corps en verre dans ladite cavité ;
dans lequel, l'étape i) comprend en outre le façonnage d'un matériau d'étanchéité en une forme souhaitée dans un moule ;
dans lequel, à l'étape i), le matériau d'étanchéité est un verre de scellement ;
dans lequel, à l'étape ii), le chauffage est effectué à une température de 300 à 600 °C ;
dans lequel, à l'étape ii), le chauffage est effectué à une température de 400 à 500 °C ;
dans lequel, à l'étape ii), le chauffage est effectué à une température supérieure ou égale à la température de scellement du matériau d'étanchéité ;
dans lequel, à l'étape ii), le chauffage est effectué à une température supérieure ou égale à la température d'activation du getter ;
dans lequel, à l'étape ii), le chauffage est effectué pendant une période supérieure ou égale au temps d'activation du getter ;
dans lequel, à l'étape ii), l'environnement sous vide a une valeur de pression absolue inférieure ou égale à 1 × 10⁻¹ Pa ;
dans lequel, à l'étape ii), l'environnement sous vide a une valeur de pression absolue inférieure ou égale à 1 × 10⁻² Pa ;
dans lequel, à l'étape ii), l'environnement sous vide a une valeur de pression absolue inférieure ou égale à 1 × 10⁻³ Pa ;
dans lequel, à l'étape ii), l'environnement sous vide a une valeur de pression absolue inférieure ou égale à 1 × 10⁻⁴ Pa ;
dans lequel, à l'étape ii), le chauffage est arrêté à un stade initial de formation de bulles du matériau d'étanchéité.

6. Procédé selon la revendication 1, dans lequel le verre sous vide comprend :
un corps de verre (1), une cavité (5) enveloppée conjointement par ledit corps de verre (1) et un matériau d'étanchéité (4), et un getter (3) disposé dans ladite cavité (5) ;
ladite cavité (5) est hermétique à l'intérieur ;
le getter (3) est un getter non évaporable, et ledit verre sous vide ne comprend pas d'enveloppe pour envelopper le getter (3), et ladite enveloppe est faite d'un matériau hermétique ;
dans une direction passant par ladite cavité (5), ledit verre sous vide a une valeur de conductivité thermique K inférieure ou égale à 4 W/(m²·K).

7. Procédé selon la revendication 6, **caractérisé par** un ou plusieurs des points suivants :
dans lequel, ledit verre sous vide ne comprend pas d'orifice d'évacuation scellé ;
dans lequel, ledit corps de verre (1) n'a pas d'orifice d'évacuation scellé sur celui-ci ;
dans lequel, ledit matériau d'étanchéité (4) n'a pas d'orifice d'évacuation scellé sur celui-ci ;
dans lequel, ledit verre sous vide n'a pas de dispositif de scellement pour sceller l'orifice d'évacuation ;
dans lequel, ledit verre sous vide comprend au moins deux corps de verre (1) ;
dans lequel, ledit verre sous vide comprend au moins trois corps de verre (1) ; et
dans lequel, des corps de verre (1) adjacents sont liés par le matériau d'étanchéité (4).

8. Procédé selon la revendication 6, dans lequel ledit corps de verre (1) comprend un corps de verre de type plaque ;
dans lequel, ledit corps de verre (1) comprend au moins deux corps de verre de type plaque ;
dans lequel, lesdits corps de verre de type plaque se font face ;
dans lequel, lesdits corps de verre de type plaque sont parallèles les uns aux autres.

9. Procédé selon la revendication 6, **caractérisé par** un ou plusieurs des points suivants :
dans lequel, ledit corps en verre (1) comprend un tube en verre ;
dans lequel, ledit corps de verre (1) comprend une plaque de verre ;
dans lequel, ladite plaque de verre est une plaque de verre plane ou une plaque de verre incurvée.

10. Procédé selon la revendication 6, **caractérisé par** un ou plusieurs des points suivants :
dans lequel, un film plaqué ou un dépôt collé est prévu sur au moins un corps en verre (1) ;
dans lequel, ledit corps en verre (1) a une surface plate ;
dans lequel ledit corps en verre (1) ne comporte pas de rainure sur celui-ci ;
dans lequel, ledit corps de verre (1) est formé de verre de silicate ;
dans lequel ledit corps en verre (1) a un point de ramollissement supérieur à 550 °C ;
dans lequel ledit corps en verre (1) a un point de ramollissement supérieur à 650 °C ;
dans lequel ledit corps en verre (1) a un point de ramollissement supérieur à 750 °C ;
dans lequel, ladite cavité (5) est une cavité de type plaque ;
dans lequel, ledit verre sous vide comprend au moins une cavité (5) ;
dans lequel, ledit verre sous vide comprend au moins deux cavités (5) ; et
dans lequel, le matériau d'étanchéité (4) et le corps de verre (1) sont conjointement soudés.

11. Procédé selon la revendication 6, dans lequel ledit matériau d'étanchéité (4) comprend un verre de scellement ; **caractérisé par** un ou plusieurs des points suivants :
dans lequel, le verre de scellement comprend un verre choisi parmi le système PbO-ZnO-B₂O₃, le système Bi₂O₃-B₂O₃-SiO₂, le système Bi₂O₃-B₂O₃-ZnO, le système Na₂O-Al₂O₃-B₂O₃, le système SnO-ZnO-P₂O₅, le système V₂O₅-P₂O₅-Sb₂O₃, le système ZnO-B₂O₃-SiO₂ et le système ZnO-B₂O₃-BaO ;
dans lequel, le verre de scellement a une température de scellement inférieure à 500 °C ;
dans lequel, le verre de scellement a une température de scellement de 300 à 450 °C ; et
dans lequel, le verre de scellement a une température de scellement de 400 à 450 °C.

12. Procédé selon la revendication 6, **caractérisé par** un ou plusieurs des points suivants :
dans lequel, ledit getter (3) est un getter activé ;
dans lequel, ledit getter (3) est capable d'absorber un ou plusieurs gaz choisis parmi O₂, N₂, CO₂, CO et H₂ ;
dans lequel, ledit getter (3) comprend une substance élémentaire à capacité d'effet getter, un alliage à capacité d'effet getter, un composé à capacité d'effet getter ou un mélange à capacité d'effet getter ;
dans lequel, ledit getter (3) contient un élément de zirconium ou un élément de titane ;
dans lequel, ledit getter (3) contient un ou plusieurs éléments de métal de transition ;
dans lequel, ledit getter (3) contient un ou plusieurs éléments de métal de terres rares ;
dans lequel, ledit getter (3) est un getter de type Zr-Al ou un getter de type Zr-V-Fe ;
dans lequel, ledit getter (3) est dans ladite cavité (5) dans une densité de 0,1 g/cm³ ou plus ;
dans lequel, ledit getter (3) est dans ladite cavité (5) dans une densité de 0,5 g/cm³ ou plus ;
dans lequel, ledit getter (3) est dans ladite cavité (5) dans une densité de 1 g/cm³ ou plus ;
dans lequel, ledit getter (3) a une température d'activation inférieure ou égale à la température de scellement du matériau d'étanchéité (4) ;
dans lequel, ledit getter (3) est capable d'être activé à 300 à 450 °C ;
dans lequel, ledit getter (3) est capable d'être activé par un traitement thermique sous vide à 300 °C ou plus pendant 1 heure ou plus, ou
ledit getter (3) est capable d'être activé par un traitement thermique sous vide à 350 °C ou plus pendant plus de 0,5 heure, ou
ledit getter (3) est capable d'être activé par un traitement thermique sous vide à 400 °C ou plus pendant 10 minutes ou plus.

13. Procédé selon la revendication 6, dans lequel ledit verre sous vide comprend en outre un support (2) pour supporter ledit corps de verre (1) de façon à maintenir la forme de la cavité (5) ; **caractérisé par** un ou plusieurs des points suivants :
dans lequel, ledit support (2) est disposé dans ladite cavité (5) ;
dans lequel, ledit support (2) est fait d'un matériau métallique ou d'un matériau non métallique ;
dans lequel, ledit support (2) est fait d'une substance inorganique transparente ;
dans lequel ledit support (2) est fait de verre (par exemple, du verre de quartz ou du verre de saphir) ;
dans lequel ledit support (2) est une feuille de verre ; et
dans lequel, ledit support (2) est une feuille de verre circulaire, une feuille de verre elliptique ou une feuille de verre polygonale ;
dans lequel, ledit getter est disposé à une position proche d'un côté intérieur dudit matériau d'étanchéité ;
dans lequel ledit support est un joint élastique ;
dans lequel ledit joint élastique est fait d'un matériau métallique.
